# EUROPEAN PATENT APPLICATION

(11) **EP 4 682 476 A1**
(43) Date of publication of application: **21.01.2026**
(21) Application number: 25186263.7
(22) Date of filing: 30.06.2025
(51) Int. Cl.: G01F 1/34, G01F 1/42, G01F 1/44, G01F 5/00, G01F 7/00

(54) **FLOW SENSOR**

(30) Priority: 16.07.2024 US 202418774575
(71) Applicant: Honeywell UK Limited, Bracknell RG12 1EB (GB)
(72) Inventor: LAMB, Robert, Charlotte, 28202 (US); KUMAGAI, Gary, Charlotte, 28202 (US); ROGERS, John, Charlotte, 28202 (US); GODDARD, Steven, Charlotte, 28202 (US)
(74) Representative: Haseltine Lake Kempner LLP

(57) **Abstract**

A flow sensor configured to sense a flow rate of a fluid. The flow sensor includes a first nozzle and a second nozzle. The first nozzle is configured to receive a first portion of a fluid flowing within a flow path and develop a first differential pressure. The second nozzle is configured to receive a second portion of the fluid flowing within the flow path and develop a second differential pressure. Control circuitry is configured to determine the flow rate using at least one of the first differential or the second differential pressure.

## Description

### TECHNICAL FIELD

The present disclosure relates to systems for determining a flow rate.

### BACKGROUND

Flows sensors are used to determine a flow rate of a fluid. In examples, a flow sensor may be used to determine a flow rate within a fluid supply system of a vehicle, such as a bleed air system of an aircraft. The bleed air system may be used to extract pressurized air from turbine engines for various uses, including supplying auxiliary power, cooling air, and other air loads served by the system. For example, aircraft bleed systems may extract pressurized air from a turbine engine supplying thrust to the aircraft to provide air to various air loads and air-use systems, such as to an environmental control system configured to pressurize a cabin of the aircraft, an air drive unit configured to pressurize hydraulics, an anti-icing system configured to remove and/or limit ice on a wing of the aircraft, an inert gas generating system configured to pressurize a fuel tank of the aircraft, and other air loads The bleed system provides the bleed air at a pressure, temperature, and mass flow sufficient to ensure an adequate bleed air supply to the served loads.

### SUMMARY

The disclosure provides a flow sensor configured to sense a flow rate of a fluid flowing within a conduit flow path defined by a conduit. The conduit may be, for example, a conduit within a delivery system of a vehicle (e.g., an aircraft). In examples, the delivery system is configured to provide the fluid to one or more gas loads of the vehicle. The flow sensor includes a body (e.g., a unitary body) defining and/or supporting a first nozzle and a second nozzle. The first nozzle may be configured to receive a first portion of the fluid flowing within the conduit flow path and develop a first differential pressure. The second nozzle may be configured to receive a second portion of the fluid flowing within the conduit flow path and develop a second differential pressure. The flow sensor is configured to determine the flow rate of the fluid flow within the conduit flow path using at least one of the first differential pressure or the second differential pressure. In examples, the flow sensor is configured to use the first differential pressure of the first nozzle at generally lower flow rates within the conduit flow path and use the second differential pressure of the second nozzle at generally higher flow rates within the conduit flow path.

In examples, a flow sensor comprises: a first nozzle body defining a first inlet, a first outlet, and a first passage extending from the first inlet to the first outlet, wherein the first passage is configured to receive a first portion of a fluid flow using the first inlet and produce a first differential pressure as the first portion flows through the first passage; a second nozzle body defining a second inlet, a second outlet, and a second passage extending from the second inlet to the second outlet, wherein the first nozzle body is configured to discharge the first portion into the second passage using the first outlet, wherein the second passage is configured to receive a second portion of the fluid flow using the second inlet and produce a second differential pressure as the second portion flows through the second passage, and wherein the second nozzle body is configured to discharge the first portion and the second portion using the second outlet; a first sensor configured to determine the first differential pressure; a second sensor configured to determine the second differential pressure; and processing circuitry configured to: receive a first signal indicative of the first differential pressure from the first sensor and receive a second signal indicative of the second differential pressure from the second sensor, and determine a flow rate of the fluid flow using at least one of the first signal or the second signal.

In examples, a flow sensor comprises: a first nozzle body defining a first inlet, a first outlet, and a first passage extending from the first inlet to the first outlet, wherein the first passage is configured to receive a first portion of a fluid flow using the first inlet and produce a first differential pressure as the first portion flows through the first passage, wherein the first nozzle body defines a longitudinal axis extending through a first inlet opening defined by the first inlet and a first outlet opening defined by the first outlet; a second nozzle body defining a second inlet, a second outlet, and a second passage extending from the second inlet to the second outlet, wherein the first nozzle body is configured to discharge the first portion into the second passage using the first outlet, wherein the second passage is configured to receive a second portion of the fluid flow using the second inlet and produce a second differential pressure as the second portion flows through the second passage, wherein the second nozzle body is configured to discharge the first portion and the second portion using the second outlet, and wherein the longitudinal axis extends through a second outlet opening defined by the second outlet; a first sensor configured to determine the first differential pressure; a second sensor configured to determine the second differential pressure; and processing circuitry configured to: receive a first signal indicative of the first differential pressure from the first sensor and receive a second signal indicative of the second differential pressure from the second sensor, determine a flow rate of the fluid flow using the first signal when the first differential pressure is within a first range, and determine the flow rate of the fluid flow using the second signal when the second differential pressure is within a second range different from the first range.

In examples, a method comprises: determining, by processing circuitry, at least one of: a first differential pressure of a first fluid portion flowing within a first passage defined by a first nozzle body, or a second differential pressure of a second fluid portion flowing within a second passage defined by a second nozzle body, wherein the first nozzle body extends within the second passage, wherein the first nozzle body defines a first outlet configured to discharge the first fluid portion into the second passage, wherein the second nozzle body defines a second outlet configured to discharge the first fluid portion and the second fluid portion into a conduit flow path defined by a conduit, and wherein the first fluid portion and the second fluid portion comprise a fluid flow within the conduit flow path; and determining, by the processing circuitry, a flow rate of the fluid flow using at least one of the first differential pressure or the second differential pressure.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a schematic illustration of an example fluid supply system of an aircraft.
FIG. 2 is a cross-sectional perspective view of an example flow sensor, with the cutting plane parallel to a longitudinal axis defined by the flow sensor.
FIG. 3 is a schematic end view of the example flow sensor within a conduit of a fluid supply system, with the conduit shown as a cross-section with a cutting plane perpendicular to the longitudinal axis.
FIG. 4 is a schematic cross-sectional view of the example flow sensor, with the cutting plane parallel to the longitudinal axis.
FIG. 5 is a flow diagram illustrating an example method of determining a flow rate using the flow sensor.

### DETAILED DESCRIPTION

The disclosure provides a flow sensor configured to sense a flow rate of a fluid flowing within a conduit flow path defined by a conduit. The flow sensor includes a body (e.g., a unitary body) defining and/or supporting a first nozzle and a second nozzle. In examples, the flow sensor is configured to attach to the conduit such that the first nozzle and the second nozzle are positioned within the conduit flow path. In examples, the first nozzle is configured to receive a first portion of the fluid flowing within the conduit flow path and cause the first portion to flow through a first passage defined by the first nozzle. The second nozzle may be configured to receive a second portion of the fluid flowing within the conduit flow path and cause the second portion to flow through a second passage defined by the second nozzle. The flow sensor is configured to determine the flow rate of the fluid flow within the conduit flow path using at least one of a first differential pressure developed by the first nozzle or a second differential pressure developed by the second nozzle.

The first nozzle is configured to discharge the first portion into the second passage defined by the second nozzle. In examples, the first nozzle (e.g., a first nozzle body defining the first nozzle) extends at least partially into the second passage of the second nozzle. The flow sensor may thus be configured to incorporate the first nozzle and the second nozzle in a manner mitigating the space requirements of the flow sensor. Mitigating the space requirements may, for example, mitigate a flow obstruction area of the flow sensor within the conduit flow path, reducing and/or mitigating impacts on the flow rate of the fluid flowing within the conduit flow path and/or mitigating a physical footprint of the sensor within a delivery system configured to provide the fluid (e.g., to one or more gas loads of a vehicle).

The flow sensor includes control circuitry configured to determine the flow rate of the fluid within the conduit flow path. The control circuitry is configured to determine the flow rate using the first nozzle, the second nozzle, and/or a combination of the first nozzle and the second nozzle. In some examples, the control circuitry determines the flow rate of the fluid within the conduit flow path using the first nozzle for relatively lower flow rates within the conduit flow path and determines the flow rate of the fluid within the conduit flow path using the second nozzle for relatively higher flow rates within the conduit flow path. In examples, the control circuitry is configured to utilize the first nozzle or the second nozzle to extend a range over which the flow sensor may sense the flow rate of the fluid through the conduit flow rate to a particular accuracy.

For example, the control circuitry may be configured to determine the flow rate within the conduit flow path using the first nozzle when the first differential pressure developed by the first nozzle is within a first range defined for the first nozzle. The first range may be, for example, indicative of range over which the first differential pressure developed by the first nozzle is expected to be indicative of a flow rate of the first portion flowing through the first nozzle to a certain accuracy. The control circuitry may be configured to correlate the first differential pressure to the flow rate of the fluid through the conduit flow path (e.g., due to a calibration) to determine the flow rate within the conduit flow path. The control circuitry may be configured to determine the flow rate within the conduit flow path using the first differential pressure when the first differential pressure is within the first range to, for example, assist in ensuring the measure of flow rate within the conduit flow path provide by the flow sensor is relatively accurate at lower flow rates through the conduit flow path.

The control circuitry may be configured to determine the flow rate within the conduit flow path using the second nozzle when the second differential pressure developed by the second nozzle is within a second range defined for the second nozzle. In examples, the second range (e.g., a midpoint of the second range) is generally greater than the first range (e.g., greater than a midpoint of the first range). The second range may be indicative of range over which the second differential pressure developed by the second nozzle is expected to be indicative of a flow rate of the second portion flowing through the second nozzle to a specific accuracy. The control circuitry may be configured to correlate the second differential pressure to the flow rate of the fluid through the conduit flow path (e.g., due to a calibration) to determine the flow rate within the conduit flow path. The control circuitry may be configured to determine the flow rate within the conduit flow path using the second differential pressure when the second differential pressure is within the second range to, for example, assist in ensuring the measure of flow rate within the conduit flow path remains accurate at higher flow rates through the conduit flow path.

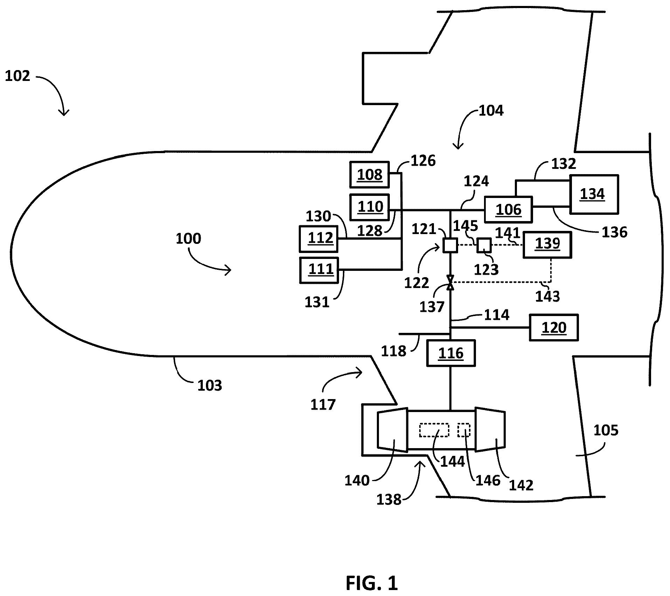

FIG. 1 illustrates an example delivery system 100 configured to deliver a fluid (e.g., air) to one or more systems of a vehicle 102. In examples, vehicle 102 is an aircraft including a fuselage 103 supporting a wing 105. Delivery system 100 may be configured to deliver the fluid to one or more gas loads 104 onboard vehicle 102, such as an environmental control system 106 ("ECS 106"), a fuel tank system 108, an air drive unit 110 ("ADU 110"), an anti-icing system 112, and/or other systems such as system 111 (e.g., a pneumatic system) configured to receive the fluid (e.g., air) from delivery system 100. In examples, delivery system 100 includes one or more conduits such as conduit 114 configured to deliver the fluid to gas loads 104. Conduit 114 may be configured to receive the fluid from a fluid supply system configured to supply the fluid, such as a bleed system 116, a connection 118 (e.g., a high pressure (HP) connection and/or a low pressure (LP) connection), an auxiliary power unit 120 ("APU 120"), and /or another fluid supply system.

Delivery system 100 includes a flow sensor 122 configured to sense a flow rate of the fluid provided by delivery system 100 to one or more of gas loads 104. Flow sensor 122 includes a body 121 defining and/or supporting a plurality of nozzles. Although depicted in FIG. 1 as configured to sense a flow rate of the fluid within conduit 114, flow sensor 122 may be configured to sense a flow rate in other conduits of delivery system 100 in other examples. For example, flow sensor 122 may be configured to sense a flow rate of the fluid within a conduit 124 configured to deliver the fluid to ECS 106, within a conduit 126 configured to deliver the fluid to fuel tank system 108, within a conduit 128 configured to deliver the fluid to ADU 110, within a conduit 130 configured to deliver the fluid to anti-icing system 112, within a conduit 131 configured to deliver the fluid to system 111, and/or within other conduits of delivery system 100. In some examples, flow sensor 122 may be configured to sense a flow rate of the fluid in a conduit of one or more of gas loads 104. For example, flow sensor 122 may be configured to sense a flow rate of the fluid within a supply conduit 132 configured to provide the fluid from ECS 106 to one or more compartments 134 ("compartments 134") of vehicle 102 (e.g., compartments defined by and/or supported by fuselage 103, such as a flight deck (e.g., a cockpit), a passenger cabin, a cargo bay, and/or another compartment of vehicle 102). Flow sensor 122 may be configured to sense a flow rate of the fluid within a return conduit 136 configured to deliver (e.g., to return) the fluid from compartments 134 to ECS 106 (e.g., to a mixing manifold of ECS 106). Although discussed below with reference to conduit 114 for illustration, it is understood that sensor 122 may be configured to sense a flow rate in other conduits of delivery system 100, gas loads 104, and/or vehicle 102 in a similar manner to that described with reference to conduit 114 and/or gas loads 104.

Flow sensor 122 (e.g., body 121) is configured to position within a flow path defined by conduit 114. Conduit 114 is configured to deliver the fluid to gas loads 104 using the flow path. Flow sensor 122 may be configured to encounter the fluid flowing through the flow path when conduit 114 delivers the fluid. In examples, flow sensor 122 is configured such that at least some portion of the fluid flows through one or more flow passages defined by flow sensor 122 when the fluid flows through the flow path defined by conduit 114. Flow sensor 122 may be configured such that the fluid exhibits one or more differential pressures when the fluid flows through the one or more flow passages. In examples, flow sensor 122 is configured to determine a flow rate of the fluid flowing through conduit 114 using the one or more differential pressures exhibited by the fluid.

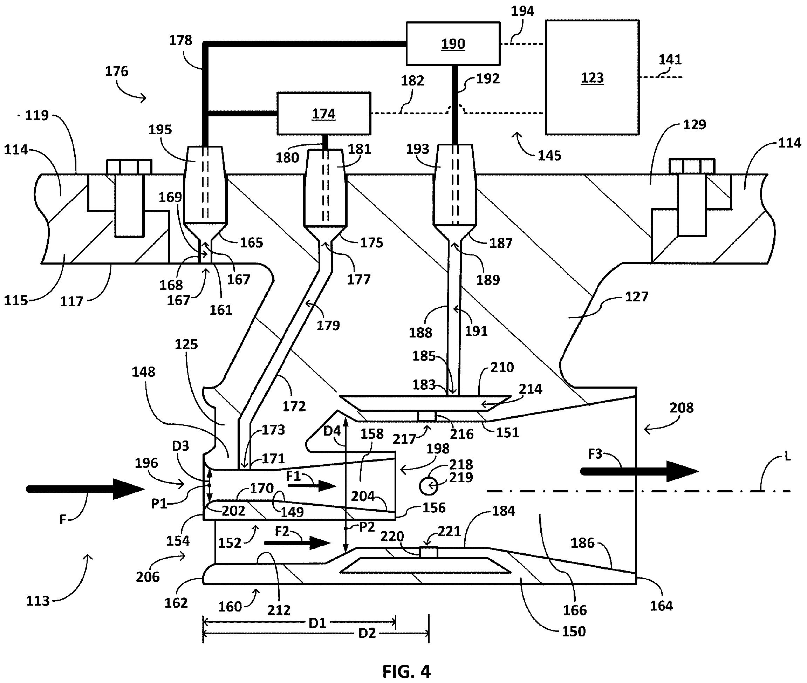

For example, flow sensor 122 may include one or more nozzles defining a flow passage extending from a nozzle inlet (e.g., first inlet 154 and/or second inlet 162 (FIG. 4)) to a nozzle outlet (e.g., first outlet 156 and/or second outlet 164 (FIG. 4)). Flow sensor 122 may be configured to receive a portion of the fluid (e.g., from conduit 114) via the nozzle inlet and discharge the portion of the fluid (e.g., to conduit 114) via the nozzle outlet. Flow sensor 122 may be configured to determine a flow rate of the fluid flowing through conduit 114 based on a differential pressure developed by the fluid as the fluid flows from the nozzle inlet to the nozzle outlet. For example, flow sensor 122 may be configured such that the differential pressure developed by the fluid as the fluid flows from the nozzle inlet to the nozzle outlet correlates (e.g., is correlated to) a flow rate of the fluid flowing through conduit 114. In examples, flow sensor 122 is configured to be calibrated such that the differential pressure as the fluid from the nozzle inlet to the nozzle outlet correlates to the flow rate of the fluid flowing through conduit 114.

Flow sensor 122 is configured to determine the flow rate of the fluid over a broad range of potential flow rates. In examples, flow sensor 122 includes a plurality of nozzles each configured to determine a flow rate within a particular range of flow rates. For example, flow sensor 122 may include a first nozzle (e.g., first nozzle 152 (FIG. 4) configured to determine a flow rate within a first range of flow rates. The first range may be a recommended range over which a differential pressure developed within the first nozzle is expected to be indicative of a flow rate (e.g., within conduit 114) to a certain accuracy. Flow sensor 122 may include a second nozzle (e.g., second nozzle 160 (FIG. 4) configured to determine a flow rate within a second range of flow rates. The second range may be a recommended range over which a differential pressure developed within the second nozzle is expected to be indicative of a flow rate (e.g., within conduit 114) to a given accuracy. In examples, the first range is generally less than the second range. For example, the first range may define a midrange value less than a midrange value of the second range. Hence, flow sensor 122 may be configured to determine (e.g., determine accurately) the flow rate of the fluid over a range which includes both the first range and the second range, as opposed to a flow meter comprising a single nozzle limited to a single range. Thus, flow sensor 122 may provide advantage when used in a system such as delivery system 100, where flow rates might be expected to vary outside of the single range during normal operations of the system (e.g., due to varying fluid demands by gas loads 104).

Flow sensor 122 may be configured to determine a flow rate of the fluid through conduit 114 using the first nozzle, the second nozzle, and/ using both the first nozzle and the second nozzle. For example, when fluid flows through conduit 114 at a lower flow rate, flow sensor 122 may be configured to determine the flow rate using the first nozzle. When fluid flows through conduit 114 at a higher flow rate greater than the lower flow rate, flow sensor 122 may be configured to determine the flow rate using the second nozzle. In some examples, flow sensor 122 is configured to determine the flow rate using the first nozzle when the lower flow rate is less than a minimum flow rate of the second range of the second nozzle. Flow sensor 122 may be configured to determine the flow rate using the second nozzle when the higher flow rate is greater than a maximum flow rate of the first range of the second nozzle.

In examples, flow sensor 122 includes an first nozzle body (e.g., first nozzle body 148 (FIG. 4)) defining and/or supporting a first nozzle, with the first nozzle defining a first passage (e.g., first passage 158 (FIG. 4)) configured to receive a first portion of a fluid flowing within conduit 114 Flow sensor 122 may include an second nozzle body (e.g., second nozzle body 150 (FIG. 4)) defining and/or supporting a second nozzle defining a second passage (e.g., second passage 166 (FIG. 4)) configured to receive a second portion of the fluid flowing within conduit 114. The first nozzle body may substantially extend into the second passage to, for example, reduce space required by flow sensor 122 within the flow path defined by conduit 114. In examples, the first nozzle body is configured to discharge the first portion from the first passage into the second passage defined by the second nozzle body. The second nozzle body may be configured to discharge the first portion and the second portion into the flow path defined by conduit 114. Hence, flow sensor 122 may be configured to incorporate a plurality of nozzle to extend a sensing range in a manner mitigating the space requirements of flow sensor 122. Mitigating the space requirements may mitigate a flow obstruction area of flow sensor 122 within conduit 114, reducing any impacts on the flow rate of the fluid through conduit 114, and/or mitigating a physical footprint of sensor 122 within delivery system 100.

In examples, flow sensor 122 includes control circuitry 123 configured to determine the flow rate of the fluid through conduit 114. Control circuitry 123 may be configured to determine the flow rate using the first nozzle, the second nozzle, and/or a combination of the first nozzle and the second nozzle. For example, control circuitry 123 may be configured to determine the flow rate using the first nozzle when a flow rate (e.g., a lower flow rate) through the first nozzle is within the first range of the first nozzle. Control circuitry 123 may be configured to determine the flow rate using the second nozzle when the flow rate (e.g., a higher flow rate) is within the second range of the second nozzle. greater than a maximum flow rate of the first range of the second nozzle.

In some examples, control circuitry 123 may be configured to receive a first signal (e.g., from first sensor 174 (FIG. 4)) indicative of a first flow through the first nozzle. Control circuitry 123 may be configured to receive a second signal (e.g., from second sensor 190 (FIG. 4)) indicative of a second flow through the second nozzle. Control circuitry 123 may be configured to determine the flow rate through conduit 114 using at least one of the first signal or the second signal. In examples, control circuitry 123 is configured to determine the flow rate through conduit 114 using the first nozzle when the first signal is less than a threshold (e.g., indicating that flow through the first nozzle is within the first range, and/or that flow through the second nozzle is outside of the second range)). Control circuitry 123 may be configured to determine the flow rate through conduit 114 using the second nozzle when the second signal is greater than or equal to the threshold (e.g., indicating that flow through the first nozzle is outside of the first range, and/or that flow through the second nozzle is within the second range). In some examples, control circuitry 123 is configured to receive the first signal and/or the second signal via one or more communication links 145 ("communication links 145").

In some examples, delivery system 100 includes system control circuitry 139 configured to control the flow rate of the fluid through conduit 114. Control circuitry 123 may be configured to communicate a signal indicative of the flow rate of the fluid through conduit 114 (e.g., using communication link 141) to system control circuitry 139. System control circuitry 139 may be configured to cause a flow control device 137 (e.g., using communication links 143) to reposition and/or substantially maintain a position based on the signal provided by control circuitry 123. In some examples, system control circuitry 139 is configured to cause flow control device 137 (e.g., using communication link 143) to reposition and/or substantially maintain a position based on a fluid demand (e.g., a current demand or an anticipated demand) of one or more of gas loads 104. For example, system control circuitry 139 may be configured to compare the flow rate indicated by the signal from control circuitry 123 and cause flow control device 137 to reposition and/or substantially maintain a position such that the flow of the fluid through conduit 114 is sufficient to meet the fluid demand of gas loads 104. In some examples, control circuitry 123 may be a portion of system control circuitry 139.

Flow control device 137 may be configured to control the flow rate of the fluid through conduit 114. Flow control device 137 may include, for example, a valve (e.g., a globe valve, poppet valve, a needle valve, a gate valve, a spool valve), a jet pump, and/or some other mechanism or combination of mechanisms configured to control (e.g., throttle) a flow rate of the fluid through conduit 114. In some examples, flow control device 137 is configured to translate a flow restricting element (not shown) to a flow control device body (not shown) of flow control device 137 to control the flow rate of the fluid within conduit 114.

In examples, flow control device 137 is configured to control the flow rate of the fluid within conduit 114 based on a position of the flow restricting element relative to the flow control device body. For example, flow control device 137 may be configured to position the flow restricting element in a shut position to substantially cease the flow of the fluid through conduit 114. Flow control device 137 may be configured to position flow the restricting element in one or more open positions (e.g., one open position or multiple different open positions) to allow the fluid to flow through conduit 114. Flow control device 137 may be configured to position the flow restricting element in multiple open positions relative to the flow control device body, with each open position corresponding to a different flow rate through conduit 114. In some examples (e.g., when flow control device 137 is a valve), the restricting element includes a globe, a poppet, a gate, a disc, a spool, or some other component configured to act as a restricting element configured to control a flow rate through a valve (e.g., through a flow path defined by a valve body of the valve). In some examples (e.g., when flow control device 137 is a jet pump), the restricting element includes a needle (e.g., a translatable needle) configured to act as a restricting element for a jet pump.

In some examples, delivery system 100 is configured to receive the fluid from bleed system 116. Bleed system 116 may be configured to receive an air flow from an engine 138 of vehicle 102. Engine 138 may be configured to intake an intake air flow via a fan section 140 and exhaust at least a first portion of the intake air flow through an exhaust section 142 (e.g., to generate engine thrust for vehicle 102 (e.g., an aircraft) during takeoff and flight). Engine 138 may be configured to use a second portion of the intake air flow to support combustion of a fuel and generate power (e.g., mechanical power). For example, engine 138 may be configured to compress the second portion using a compressor section 144 to generate a compressed air flow. Engine 138 may be configured to mix a portion of the compressed air flow and a fuel to cause a combustion in a combustion section 146 to generate the power. Engine 138 may be configured to transfer some portion of the generated power to fan section 140 to cause fan section 140 to continue the intake of the intake air flow. Vehicle 102 may include any number of engines such as engine 138 configured to generate engine thrust on vehicle 102.

Bleed system 116 may be configured to divert some amount of the compressed air flow from compressor section 144 (e.g., prior to the compressed air flow entering combustion section 146). In some examples, bleed system 116 is configured to extract the compressed air flow gas from multiple compressor stages of compressor section 144, such as lower pressure air from a lower pressure compressor stage and/or a higher pressure air from a higher pressure compressor stage. Bleed system 116 may be configured to provide the air flow to conduit 114 using the compressed air received from compressor section 144. In some examples, bleed system 116 includes a pre-cooler (not shown) configured to reduce a temperature of the compressed air flow received from compressor section 144 and/or provided to conduit 114. In examples, the pre-cooler is configured to cause a heat exchange between the compressed air flow received from compressor section 144 and a heat exchange fluid, such as a second air flow received by vehicle 102 via a ram air scoop (e.g., while in flight) or a second air flow driven by a fan (e.g., when grounded).

In some examples, delivery system 100 is configured to receive the fluid from APU 120. APU 120 may include, for example, a gas turbine. Vehicle 102 may include APU 120 in addition to or instead of engine 138 and/or bleed system 116. APU 120 may be configured to provide the fluid to delivery system 100 (e.g., conduit 114) when engine 138 is not running, such as when vehicle 102 is waiting at a gate. In some examples, APU 120 is configured to produce and supply electric power to one or more systems and/or components of vehicle 102 (e.g., when engine 138 is not producing power adequate to generate the electric power requirements of vehicle 102, such as when vehicle 102 is waiting at a gate).

In some examples, delivery system 100 is configured to receive the fluid from connection 118 (e.g., a high pressure (HP) connection and/or a low pressure (LP) connection). Connection 118 may be configured to receive air and/or other fluids from supply sources outside vehicle 102 and provide the air and/or other fluids to delivery system 100 (e.g., conduit 114). In some examples, connection 118 is accessible from outside vehicle 102 and configured to receive the air and/or other fluids while vehicle 102 is grounded. For example, connection 118 may be configured to couple to one or more pieces of machinery, such as a ground cart, configured to supply the air and/or other fluids air to delivery system 100. In some examples, connection 118 is accessible from inside vehicle 102 and configured to receive air while vehicle 102 is grounded or in flight. For example, connection 118 may be configured to couple to one or more pieces of machinery configured to supply the air and/or other fluids to ECS 106.

In some examples, fuel tank system 108 may be configured to receive fluid from delivery system 100 to pressurize a fuel tank configured to provide a fuel to engine 138 (e.g., to pressurize an ullage space of the fuel tank). In examples, fuel tank system 108 includes an inert gas generation system (not shown) configured to reduce an oxygen concentration of the fluid prior to the fluid entering the ullage space. ADU 110 may be configured to pressurize a hydraulic system of vehicle 102 to allow, for example, the operation of flaps and other control surfaces of vehicle 102 (e.g., flaps and control surfaces on wing 105). Anti-icing system 112 may be configured to remove and/or limit ice on wing 105 and/or another portion of vehicle 102. System 111 may be a system, device, component, or combination thereof configured to receive supply fluid from delivery system 100 to, for example, support the operations of vehicle 102.

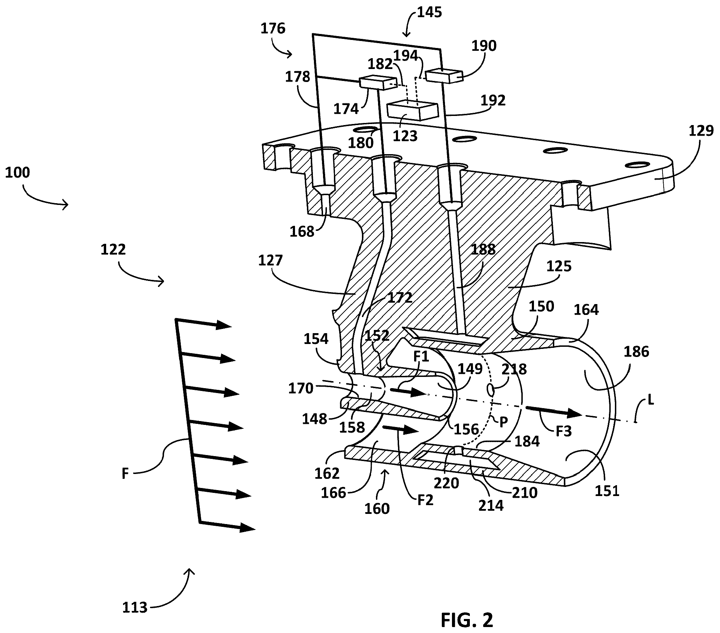

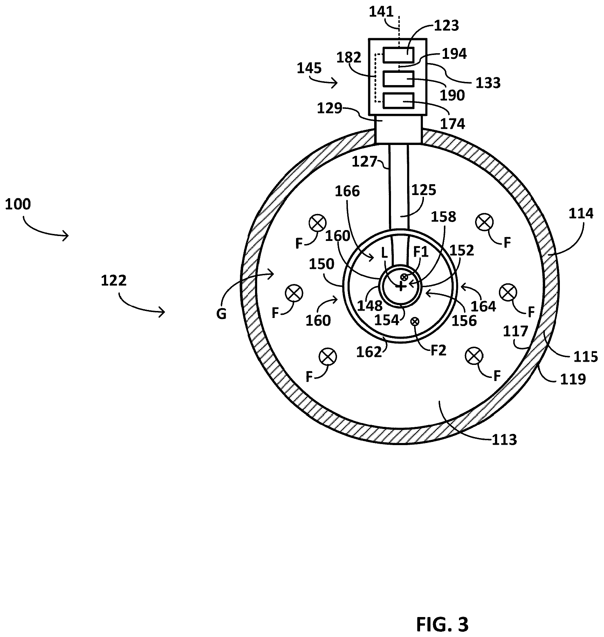

FIG. 2 depicts a perspective cross-sectional view of a portion of a flow sensor 122 including an first nozzle body 148 and an second nozzle body 150, with a cutting plane taken parallel to a longitudinal axis L defined by flow sensor 122. FIG. 2 schematically illustrates flow sensor 122 positioned (e.g., installed) in conduit 114. In FIG. 2, conduit 114 is shown as a cross-section with a cutting plane taken parallel to the page and perpendicular to longitudinal axis L. FIG. 3 depicts a schematic illustration of flow sensor 122 positioned within conduit 114, with longitudinal axis L proceeding out of the page and conduit 114 depicted as a cross section with the cutting plane parallel to the page. FIG. 4 illustrates a schematic cross-sectional view of flow sensor 122, with longitudinal axis L parallel to the page and a cutting plane parallel to the page.

With reference to FIG. 2, first nozzle body 148 defines a first nozzle 152 including a first inlet 154, a first outlet 156, and a first passage 158 extending from first inlet 154 to first outlet 156. In examples, first nozzle body 148 includes an interior wall 149 ("first nozzle wall 149") defining first passage 158. In examples, first nozzle wall 149 extends from first inlet 154 to first outlet 156. Second nozzle body 150 defines a second nozzle 160 including a second inlet 162, a second outlet 164, and a second passage 166 extending from second inlet 162 to second outlet 164. In examples, second nozzle body 150 includes an interior wall 151 ("second nozzle wall 151") defining second passage 166. In examples, second nozzle wall 151 extends from second inlet 162 to second outlet 164.

First nozzle body 148 extends within at least some portion of second passage 166. In examples, at least one of second nozzle body 150 or first nozzle body 148 defines a longitudinal axis L. In examples, longitudinal axis L extends through first inlet 154 and first outlet 156. In examples, longitudinal axis L extends through at least second outlet 164.

Flow sensor 122 (e.g., first nozzle body 148 and/or second nozzle body 150) is configured to be positioned within a flow path for a fluid flow F flowing within a conduit flow path 113 defined by a conduit (e.g., conduit 114). First nozzle 152 is configured to receive a first portion F1 of fluid flow F using first inlet 154. First nozzle 152 may be configured to cause first portion F1 to flow through first passage 158 before discharging first portion F1 through first outlet 156. Second nozzle 160 is configured to receive a second portion F2 of fluid flow F using second inlet 162. Second nozzle 160 may be configured to cause second portion F2 to flow through second passage 166 before discharging second portion F2 through second outlet 164. In examples, first nozzle 152 is configured to discharge first portion F1 into second passage 166 defined by second nozzle body 150. In examples, second nozzle 160 is configured to discharge a third portion F3 comprising first portion F1 and second portion F2 using second outlet 164. Second nozzle 160 may be configured to discharge first portion F1, second portion F2, or third portion F3 into the flow path defined by the conduit.

Control circuitry 123 is configured to determine a flow rate of a fluid (e.g., a flow rate of fluid flow F) the fluid through conduit 114 using first nozzle 152 and/or second nozzle 160. In examples, control circuitry 123 is configured to determine the flow rate of fluid flow F through conduit 114. For example, control circuitry 123 may be configured to determine the flow rate of fluid flow F using a flow rate of first portion F1 through first passage 158 (e.g., as indicated by a first differential pressure developed by first nozzle 152). Control circuitry 123 may be configured to (e.g., instead of or in addition to determining the flow rate of first portion F1) determine the flow rate of fluid flow F using a flow rate of second portion F2 and/or a combination of second portion F2 and first portion F1 through second passage 166 (e.g., as indicated by a second differential pressure developed by second nozzle 160).

Control circuitry 123 may be configured to (e.g., calibrated to) determine the flow rate of fluid flow F using the flow rate of first portion F1 and/or the flow rate of second portion F2. For example, control circuitry 123 may be calibrated such that a particular flow rate of first portion F1 substantially correlates to a particular flow rate of fluid flow F (e.g., within conduit 114 or another conduit of delivery system 100). Control circuitry 123 may be calibrated such that a specific flow rate of second portion F2 substantially correlates to a specific flow rate of fluid flow F (e.g., within conduit 114 or another conduit of delivery system 100). In some examples, control circuitry 123 may be calibrated such that a combination of the particular flow rate of first portion F1 and the specific flow rate of second portion F2 substantially correlates to a certain flow rate of fluid flow F (e.g., within conduit 114 or another conduit of delivery system 100). Hence, control circuitry 123 may be configured to determine the flow rate of fluid flow F by determining a flow rate of first portion F1 using first nozzle 152 and/or a flow rate of second portion F2 using second nozzle 160.

Control circuitry 123 may be configured to determine the flow rate of first portion F1 using a first differential pressure developed across some portion of first nozzle 152 as first portion F1 flows through first passage 158. The first differential pressure may be indicative of the flow rate of first portion F1. In examples, the first differential pressure is a difference in a pressure of a fluid (e.g., fluid flow F) at a location upstream of first nozzle 152 (e.g., in the vicinity of an upstream channel 168) and a pressure of some portion of the fluid (e.g., first portion F1) at a location within first nozzle 152 (e.g., in the vicinity of a first channel portion 172). Control circuitry 123 may be configured to determine the flow rate of fluid flow F using the first differential pressure to determine the flow rate of first portion F1 within first passage 158, then using (e.g., correlating) the flow rate of first portion F1 to determine the flow rate of fluid flow F within conduit flow path 113.

Control circuitry 123 may be configured to determine the flow rate of second portion F2 using a second differential pressure developed across some portion of second nozzle 160 as second portion F2 flows through second passage 166. The second differential pressure may be indicative of the flow rate of second portion F2. In examples, the second differential pressure is a difference in a pressure of a fluid (e.g., fluid flow F) at a location upstream of second nozzle 160 (e.g., in the vicinity of upstream channel 168) and a pressure of some portion of the fluid (e.g., second portion F2) at a location within second nozzle 160 (e.g., in the vicinity of a second channel portion 188). Control circuitry 123 may be configured to determine the flow rate of fluid flow F using the second differential pressure to determine the flow rate of second portion F2 and/or a combination of second portion F2 and first portion F1 within second passage 166, then using (e.g., correlating) the flow rate of second portion F2 and/or the combination of second portion F2 and first portion F1 to determine the flow rate of fluid flow F within conduit flow path 113.

In examples, control circuitry 123 is configured to determine the flow rate of fluid flow F using the first differential pressure when the first differential pressure is within a first range (e.g., an inclusive range). The first range may be based on characteristics of first nozzle 152. For example, first nozzle 152 may be configured such that, over the first range, the first differential pressure is indicative of the flow rate of first portion F1 within first passage 158 to a first accuracy, such as 2%, 5%, or another accuracy. Control circuitry 123 may be configured to determine that the first differential pressure is within the first range, subsequently use the first differential pressure as indicative of the flow rate of first portion F1, and subsequently use at least the flow rate of first portion F1 (e.g., as indicated by the first differential pressure) to determine fluid flow F within conduit flow path 113. In some examples, the first range may be indicative of lower flow rates of fluid flow F within conduit flow path 113.

Control circuitry 123 may be configured to determine the flow rate of fluid flow F using the second differential pressure when the second differential pressure is within a second range (e.g., an inclusive range). The second range may be based on characteristics of second nozzle 160. For example, second nozzle 160 may be configured such that, over the second range, the second differential pressure is indicative of the flow rate of second portion F2 and/or a combination of second portion F2 and first portion F1 within second passage 166 to a second accuracy, such as 1%, 5%, or another accuracy. Control circuitry 123 may be configured to determine that the second differential pressure is within the second range, subsequently use the second differential pressure as indicative of a flow rate within second passage 166 (e.g., a flow rate of first portion F2 and/or the combination of second portion F2 and first portion F1), and subsequently use at least the flow rate within second passage 166 (e.g., as indicated by the second differential pressure) to determine fluid flow F within conduit flow path 113. In some examples, the second range may be indicative of higher flow rates of fluid flow F within conduit flow path 113.

In some examples, such as when the first differential pressure is within the first range and the second differential pressure is within the second range, control circuitry 123 may be configured to determine a flow rate of fluid flow F using the first differential pressure and the second differential pressure. For example, in some examples, control circuitry 123 may be configured to determine the flow rate of fluid flow F by correlating the first differential pressure and the second differential pressure determined to a flow rate of first portion F1 within conduit flow path 113.

Control circuitry 123 may be configured to correlate the first differential pressure to a flow rate of fluid flow F, correlate the second differential pressure to the flow rate of fluid flow F, and/or correlate the first differential pressure and the second differential pressure to the fluid flow F by calibrating flow sensor 122 within a fluid flow such as fluid flow F. For example, flow sensor 122 may be calibrated such that the first differential pressure correlates to a flow rate within conduit flow path 113 (e.g., when the first differential pressure is within the first range). Flow sensor 122 may be calibrated such that the second differential pressure correlates to the flow rate within conduit flow path 113 (e.g., when the first differential pressure is within the second range). Flow sensor 122 may be calibrated such that the first differential pressure and the second differential pressure together correlate to the flow rate within conduit flow path 113 (e.g., when the first differential pressure is within the first range and the second differential pressure is within the second range). Control circuitry 123 may be configured to determine (e.g., based on the calibration) the flow rate of fluid flow F using the first differential pressure, the second differential pressure, and/or both the first differential pressure and the second differential pressure.

In some examples, flow sensor 122 (e.g., first nozzle 152) is configured such that the first range corresponds to a first flow rate range of fluid flow F within conduit flow path 113. Flow sensor 122 (e.g., second nozzle 160) may be configured such that the second range corresponds to a second flow rate range of fluid flow F within conduit flow path 113. Flow sensor 122 may be configured such that the first flow rate range and the second flow rate range together define a continuous range defining the flow rate of fluid flow F within conduit flow path 113. In some examples, the first flow rate range is indicative of lower flow rates within conduit flow path 113 and the second flow rate range is indicative of higher flow rates within conduit flow path 113. For example, the first flow rate range may include a first range midpoint and the second flow rate range may include a second range midpoint greater than the first range midpoint.

In some examples, control circuitry 123 is configured to receive a first signal (e.g., from a first sensor 174) indicative of the first differential pressure of first nozzle 152. Control circuitry 123 may be configured to receive a second signal (e.g., from a second sensor 190) indicative of the second differential pressure of second nozzle 160. Control circuitry 123 may be configured to determine the flow rate through conduit 114 using at least one of the first signal or the second signal. In examples, control circuitry 123 is configured to determine the flow rate through conduit 114 using first nozzle 152 when the first signal is less than a threshold (e.g., indicating that flow through first nozzle 152 is within the first range, and/or that flow through second nozzle 160 is outside of the second range)). Control circuitry 123 may be configured to determine the flow rate through conduit 114 using second nozzle 160 when the second signal is greater than or equal to the threshold (e.g., indicating that flow through first nozzle 152 is outside of the first range, and/or that flow through second nozzle 160 is within the second range). In some examples, control circuitry 123 is configured to receive the first signal and/or the second signal via one or more communication links 145 ("communication links 145").

In examples, flow sensor 122 is configured such that first nozzle body 148 is substantially stationary relative to second nozzle body 150. For example, flow sensor 122 may include a support member 125 configured to hold first nozzle body 148 substantially stationary relative to second nozzle body 150. Support member 125 may extend at least between first nozzle body 148 and second nozzle body 150. In examples, first nozzle body 148 and/or second nozzle body 150 are configured to be substantially stationary relative to support member 125. In examples, support member 125 is attached to a flange portion 129 of flow sensor 122. Flange portion 129 may be configured to be attached (e.g., mechanically attached) to a conduit (e.g., conduit 114) to position flow sensor 122 within a flow path defined by the conduit.

In some examples, flow sensor 122 includes a unitary body 127 comprising two or more of first nozzle body 148, second nozzle body 150, support member 125, and/or flange portion 129. Unitary body 127 may be a substantially contiguous body defining two or more of first nozzle body 148, second nozzle body 150, support member 125, and/or flange portion 129. For example, unitary body 127 may be configured such that two or more of first nozzle body 148, second nozzle body 150, support member 125, and/or flange portion 129 substantially behave as a single rigid body, such that the two or more of first nozzle body 148, second nozzle body 150, support member 125, and/or flange portion 129 remain substantially stationary relative to each other when unitary body 127 experiences a motion (e.g., a displacement and/or a rotation). For example, unitary body 157 may be a 3-D printed, a cast, and/or a machined component comprising two or more of first nozzle body 148, second nozzle body 150, support member 125, and/or flange portion 129. In some examples, unitary body 127 comprises and/or defines each of first nozzle body 148, second nozzle body 150, support member 125, and flange portion 129. Using unitary body 127 to define two or more of first nozzle body 148, second nozzle body 150, support member 125, and/or flange portion 129 may ease installation and/or fabrication of flow sensor 122. For example, use of unitary body 127 may assist in maintaining the position of first nozzle body 148 relative to second nozzle body 150 when flange portion 129 is attached to the conduit.

As depicted in FIG. 3, flow sensor 122 may be positioned within flow path 113 defined by conduit 114 ("conduit flow path 113"). Conduit flow path 113 may be defined to provide a flow path for fluid flow F within delivery system 100. In FIG. 3, fluid flow F flows through conduit flow path in a direction into the page. In examples, conduit 114 includes a wall 115 ("conduit wall 115") defining an inner surface 117 ("conduit inner surface 117") and an outer surface 119 ("conduit outer surface 119") opposite conduit inner surface 117. Conduit 114 may define conduit flow path 113 using conduit inner surface 117. The arrangement of first nozzle 152 and second nozzle 160 provided by flow sensor 122 may mitigate the space requirements of flow sensor 122 within conduit flow path 113 while allowing for a determination of a flow rate of fluid flow F over a total range which includes both a first range of first nozzle 152 and a second range of second nozzle 160, as opposed to a flow meter comprising a single nozzle limited to a single range.

Flow sensor 122 may be configured to position within conduit flow path 113 such that, as fluid flow F encounters sensor 122 within conduit flow path 113, first portion F1 (e.g., a first portion of fluid flow F) enters first passage 158 via first inlet 154 and/or second portion F2 (e.g., a second portion of fluid flow F) enters second passage 166 via second inlet 162. Flow sensor 122 may be positioned within conduit flow path 113 such that a remainder of fluid flow F substantially flows around flow sensor 122 by, for example, passing through a gap G between flow sensor 122 and conduit wall 115 (e.g., conduit inner surface 117). Flow sensor 122 may be configured such that first portion F1 flows through first passage 158 and second portion F2 flows through second passage 166 prior to flow sensor 122 discharging first portion F1 and second portion F2 (e.g., via second outlet 164) back into conduit flow path 113 to, for example, rejoin the portion of fluid flow F which flows around flow sensor 122 via gap G. Hence, flow sensor 122 may be configured such that first portion F1 and/or second portion F2 flow through flow sensor 122 substantially in a parallel flow arrangement with the portion of fluid flow F which flows around flow sensor 122 via gap G. The parallel flow arrangement may mitigate pressure losses within conduit flow path 113 as fluid flow F encounters flow sensor 122, reducing an impact of flow sensor 122 on fluid delivered by delivery system 100 to one or more of gas loads 104 (FIG. 1).

Flow sensor 122 (e.g., support member 125) is configured to position first nozzle body 148 relative to second nozzle body 150 such that first nozzle body 148 extends within at least some portion of second passage 166. Flow sensor 122 may be configured to position first nozzle body 148 relative to second nozzle body 150 such that longitudinal axis L extends through at least some portion of first passage 158 and at least some portion of second passage 166. In examples, first inlet 154 and first outlet 156 surround longitudinal axis L. In some examples, second inlet 162 and second outlet 164 surround longitudinal axis L.

Flow sensor 122 may be configured to attach (e.g., mechanically attach) to conduit 114. In examples, flow sensor 122 is configured such that first nozzle body 148, second nozzle body 150, support member 125, and/or flange portion 129 are substantially stationary relative to a portion of conduit 114 (e.g., conduit wall 115) when Flow sensor 122 attaches to conduit 114. In examples, flow sensor 122 is configured to attach to conduit 114 using flange portion 129. For example, flow sensor 122 (e.g., flange portion 129) may be configured to be attached to conduit 114 using any suitable technique, such as but not limited to one or more fasteners, welding, soldering, adhesives, engineering fits, fusion, friction, or other techniques.

In some examples, flow sensor 122 includes a housing 133 configured to house and/or mechanically support at least some portion of control circuitry 123 and/or other portions of flow sensor 122. In examples, housing 133 is configured to house and/or mechanically support one or more sensors (e.g., first sensor 174, second sensor 190 (FIG. 2, FIG. 4)) of flow sensor 122. In some examples, flange portion 129 supports (e.g., mechanically supports) housing 133. Flow sensor 122 may be configured such that housing 133 positions outside of conduit flow path 113 when first nozzle body 148 and/or second nozzle body 150 position within conduit flow path 113. In examples, housing 133 is configured to position outside of conduit flow path 113 when flange portion 129 is attached to conduit 114.

Referring largely to FIG. 4, control circuitry 123 is configured to determine the flow rate of fluid flow F using first nozzle 152, second nozzle 160, and/or a combination of first nozzle 152 and second nozzle 160. For example, first nozzle 152 may be configured to develop a first differential pressure which is indicative of a flow rate of first portion F1. Flow sensor 122 may be positioned within the conduit (e.g., conduit 114) such that the flow rate of first portion F1 (e.g., as indicated by the first differential pressure) entering first nozzle 152 correlates to the flow rate of fluid flow F. Hence, control circuitry 123 may be configured to determine the flow rate of fluid flow F using the first differential pressure to determine the flow rate of first portion F1, then using the flow rate of first portion F1 to determine the flow rate of fluid flow F. In examples, the first differential pressure developed by first nozzle 152 and utilized by control circuitry 123 is indicative of a difference in pressure between a pressure of fluid flow F upstream of first inlet 154 and a pressure of first portion F1 within a throat section 170 of first nozzle 152 ("first throat section 170"). In examples, flow sensor 122 is configured to sense the pressure of fluid flow F upstream of first inlet 154 using upstream channel portion 168 and/or sense the pressure of first portion F1 within first throat section 170 using first channel portion 172.

In examples, first channel portion 172 includes an inlet 171 ("first channel inlet 171") defining an inlet opening 173 ("first channel inlet opening 173") and an outlet 175 ("first channel outlet 175") defining an outlet opening 177 ("first channel outlet opening 177"). First channel portion 172 may define a lumen 179 ("first channel lumen 179") extending from first channel inlet opening 173 to first channel outlet opening 177. In examples, first channel inlet opening 173 opens into first passage 158. First channel portion 172 may be configured such that a static pressure of a fluid (e.g., some portion of first portion F1) at first channel outlet opening 177 is indicative of (e.g., substantially the same as) a static pressure of the fluid at first channel inlet opening 177. Hence, first channel portion 172 may be configured to communicate (e.g., using first channel lumen 179) a static pressure of first portion F1 within first passage 158 to first channel outlet opening 177. First channel portion 172 may be a portion of first nozzle body 148, second nozzle body 150, unitary body 127, and/or comprise another portion of flow sensor 122.

In examples, upstream channel portion 168 includes an inlet 161 ("upstream channel inlet 161") defining an inlet opening 163 ("upstream channel inlet opening 163") and an outlet 165 ("upstream channel outlet 165") defining an outlet opening 167 ("upstream channel outlet opening 167"). Upstream channel portion 168 may define a lumen 169 ("upstream channel lumen 169") extending from upstream channel inlet opening 163 to upstream channel outlet opening 167. In examples, upstream channel inlet opening 163 opens into conduit flow path 113. Upstream channel portion 168 may be configured such that a static pressure of a fluid (e.g., some portion of fluid flow F) within upstream channel outlet opening 167 is indicative of (e.g., substantially the same as) a static pressure of the fluid at upstream channel inlet opening 167. Hence, upstream channel portion 168 may be configured to communicate (e.g., using upstream channel lumen 169) a static pressure of fluid flow F within conduit flow path 113 to upstream channel outlet opening 167. Upstream channel portion 168 may be a portion of first nozzle body 148, second nozzle body 150, unitary body 127, and/or comprise another portion of flow sensor 122.

In examples, upstream channel portion 168 is configured to fluidically couple upstream channel lumen 169 (e.g., via upstream channel inlet 167 and/or upstream channel inlet opening 167) and conduit flow path 113 when first passage 158 and second passage 166 are fluidically coupled to conduit flow path 113. Flange portion 129 may be configured to cause upstream channel lumen 169, first passage 158, and second passage 166 to fluidically couple to conduit flow path 113 when flange portion 129 is attached to conduit 114. In examples, upstream channel lumen 169 is configured to fluidically couple to conduit flow path 113 at a location upstream of first inlet 154 and/or second inlet 162 when first portion F1 flows in a downstream direction from first inlet 154 to first outlet 156 and/or when second portion F2 flows in the downstream direction from second inlet 162 to second outlet 164.

Although discussed with reference to upstream channel portion 168 and first channel portion 172 above and in the examples below, the first differential pressure developed by first nozzle 152 may be any differential pressure developed by as a result of first portion F1 flowing through first nozzle 152. As used herein and elsewhere, the first differential pressure may refer to a difference in a pressure of a fluid between a first point within first passage 158 and a pressure of the fluid upstream at a second point upstream of the first point when first portion F1 flows from first inlet 154 to first outlet 156. In examples, the second point is located within conduit flow path 113. In some examples, the second point is located within first passage 158. The first point and/or the second point may be located anywhere within first passage 158 between and including first inlet 154 and first outlet 156.

Control circuitry 123 may be configured to use the first differential pressure developed by first nozzle 152 when the first differential pressure is within the first range. For example, first nozzle 152 may be configured such that, within the first range, the first differential pressure developed by first nozzle 152 is related to the flow rate of first portion F1 by a first factor relating the first differential pressure and the flow rate of first portion F1. In some examples, the first factor may relate a root (e.g., a square root) of the first differential pressure to the flow rate of first portion F1. In examples, first nozzle 152 is configured such that, over the first differential pressure range, the first factor and the first differential pressure are indicative of the flow rate of first portion F1 to within a certain accuracy, such as within 2% of the flow rate of first portion F1, within 5% of the flow rate of first portion F1, or within another percentage of the flow rate of first portion F1. Control circuitry 123 may be configured to determine when a first differential pressure developed by first nozzle 152 (e.g., as sensed using upstream channel portion 168 and first channel portion 172) is within the first range associated with first nozzle 152. Control circuitry 123 may be configured to determine the flow rate of fluid flow F using the first differential pressure when the first differential pressure is within the first range.

In examples, flow sensor 122 includes a first sensor 174 configured to sense the first differential pressure. For example, first sensor 174 may include one or more force sensors (e.g., force collectors and/or transducers) configured to receive a force imparted by a fluid and indicative of a pressure of the fluid at a point within first passage 158. The one or more force sensors of first sensor 174 may be configured to receive a force imparted by the fluid and indicative of a pressure of the fluid upstream of the point within first passage 158. First sensor 174 may be configured to sense the first differential pressure using the force indicative of the pressure of the fluid at the point within first passage 158 and the force indicative of the pressure of the fluid upstream of the point within first passage 158.

For example, first sensor 174 may be configured to sense the first differential pressure using upstream channel portion 168 e.g., via upstream channel outlet opening 167) and first channel portion 172 (e.g., via first channel outlet opening 177). First sensor 174 may be configured such that a force imparted on the one or more force sensors by a portion of fluid flow F within upstream channel portion 168 is indicative of a pressure of fluid flow F within the conduit (e.g., conduit 114). In examples, flow sensor 122 includes one or more structures 176 ("structures 176") such as structure 178 configured to fluidically couple the one or more force sensors and upstream channel lumen 169 (e.g., via a plug bolt 195 or other component. First sensor 174 may be configured such that a force imparted on the one or more force sensors by a portion first portion F1 within first channel portion 172 is indicative of a pressure of first portion F1 within first passage 158 (e.g., within first throat section 170). Structures 176 may include structure 180 configured to fluidically couple the one or more force sensors and first channel lumen 179 (e.g., via a plug bolt 181 or other component). First sensor 174 may be configured to sense the first differential pressure using the force imparted by the portion of fluid flow F within upstream channel portion 168 and the force imparted by the portion of first portion F1 within first channel portion 172.

First sensor 174 may be configured to sense the first differential pressure in other ways in other examples. For example, first sensor 174 may be configured such that the one or more force collectors are configured to substantially position within first passage 158 (e.g., rather than within and/or fluidically coupled to first channel lumen 179) to sense the pressure of the fluid at the first point. First sensor 174 may be configured such that the one or more force collectors are configured to substantially position within conduit flow path 113 (e.g., rather than within and/or fluidically coupled to upstream channel lumen 179) to sense the pressure of the fluid at the second point upstream of the first point.

First sensor 174 is configured to communicate a first signal indicative of the first differential pressure to control circuitry 123 (e.g., via communication link 182). Control circuitry 123 may be configured to determine the first differential pressure using the first signal. Control circuitry 123 may be configured to determine if the first differential pressure is within the first range of first nozzle 152 using the first signal. For example, control circuitry 123 may be configured to determine (e.g., assess that) the first differential pressure is within the first range based on comparison of the first signal and a first signal threshold. In some examples, control circuitry 123 may be configured to determine (e.g., assess that) the first differential pressure is within the first range based on comparison of a second signal (e.g., a second signal from a second sensor 190) and a second signal threshold. Control circuitry 123 may be configured to, based on the comparison of the first signal and the first signal threshold and/or a comparison of the second signal and the second signal threshold, determine the flow rate of fluid flow F using the first differential pressure. In some examples, the first signal threshold may be indicative of a first signal indicating that first nozzle 152 is experiencing a flow through first passage 158 that is greater than or less than a flow through first passage 158 for which first nozzle 152 is expected to be accurate.

Hence, control circuitry 123 may be configured to use first nozzle 152 to determine a flow rate of fluid flow F when the first differential pressure is within the first range over which first nozzle 152 is configured to indicate a flow rate (e.g., of first portion F1) within a certain accuracy. In examples, control circuitry 123 may be configured to substantially disregard (e.g., ignore) the first signal when the first differential pressure is outside of the first range. For example, when the first differential pressure is outside of the first range, control circuitry 123 may be configured to determine the flow rate of fluid flow F using second nozzle 160.

Control circuitry 123 may be configured to use the second differential pressure developed by second nozzle 160 when the first differential pressure is outside of the first range and/or when the second differential pressure is within the second range. Flow sensor 122 may be positioned within the conduit (e.g., conduit 114) such that a second passage flow rate describing a flow rate of a portion of fluid flow F within second passage 166 correlates to the flow rate of fluid flow F. The second passage flow rate may be, for example, a flow rate of second portion F2 entering second inlet 162, a flow rate of second portion F2 and/or first portion F1 (e.g., third portion F3) flowing within a throat section 184 defined by second nozzle 160 ("second throat section 184"), a flow rate of second portion F2 and/or first portion F1 (e.g., third portion F3) flowing within an outlet section 186 defined by second nozzle 160 ("second outlet section 186"), and/or a flow rate of second portion F2, first portion F1, or third portion F3 flowing through another portion of second passage 166.

In examples, the second differential pressure developed by second nozzle 160 and utilized by control circuitry 123 is indicative of a difference in pressure between a pressure of fluid flow F upstream of second inlet 162 and a pressure of the second passage flow rate within second throat section 184. In examples, flow sensor 122 is configured to sense the pressure of fluid flow F upstream of second inlet 162 using upstream channel portion 168 and/or sense the pressure of the second passage flow rate using second channel portion 188.

In examples, second channel portion 188 includes an inlet 183 ("second channel inlet 183") defining an inlet opening 185 ("second channel inlet opening 185") and an outlet 187 ("second channel outlet 187") defining an outlet opening 189 ("second channel outlet opening 189"). Second channel portion 188 may define a lumen 191 ("second channel lumen 191") extending from second channel inlet opening 185 to second channel outlet opening 189. In examples, second channel inlet opening 185 is fluidically coupled to second passage 166 (e.g., via a chamber portion 210). Second channel portion 188 may be configured such that a static pressure of a fluid (e.g., some portion of second portion F2) within second channel outlet opening 189 is indicative of (e.g., substantially the same as) a static pressure of the fluid at second channel inlet opening 185. Hence, second channel portion 188 may be configured to communicate (e.g., using second channel lumen 191) a static pressure of second portion F2 within second passage 166 to second channel outlet opening 189.

As further discussed below, chamber portion 210 may a portion of first nozzle body 148 and/or second nozzle body 150 defining a volume 214 ("chamber volume 214") configured to fluidically couple second channel inlet opening 185 and second passage 166. In examples, chamber portion 210 includes one or more ports such as port 216, port 218, and/or port 220. In examples, the one or more ports define one or more openings. For example, port 216 may define a port opening 217 and/or port 216 may define a port opening 219. In examples, second channel inlet opening 185 opens into chamber volume 214. Port opening 217 and/or port opening 219 open into second passage 166. Second channel portion 188 and/or chamber portion 210 may be a portion of first nozzle body 148, second nozzle body 150, unitary body 127, and/or comprise another portion of flow sensor 122.

Although discussed with reference to upstream channel portion 168 and second channel 184 above and in the examples below, the second differential pressure developed by second nozzle 160 may be any differential pressure developed by as a result of first portion F1, second portion F2, or third portion F3 flowing through second nozzle 160. As used herein and elsewhere, the second differential pressure may refer to a difference in a pressure of a fluid between a third point within second passage 166 and a pressure of the at a fourth point upstream of the third point when second portion F2 flows from second inlet 162 to second outlet 164. In examples, the fourth point is located within conduit flow path 113.In some examples, the fourth point is substantially co-located with the second point of the first differential pressure. In some examples, the fourth point is located within second passage 166. The third point and/or the fourth point may be located anywhere within second passage 166 between and including second inlet 162 and second outlet 164.

Second nozzle 160 may be configured such that, within the second range, the second differential pressure developed by second nozzle 160 is indicative of the second passage flowrate by a second factor relating the second differential pressure and the second passage flowrate. In some examples, the second factor may relate a root (e.g., a square root) of the second differential pressure to the second passage flow rate. In examples, second nozzle 160 is configured such that, over the second differential pressure range, the second factor and the second differential pressure determine the second passage flow rate to within a certain accuracy, such as within 2% of the second passage flow rate, within 5% of the second passage flow rate, or within another percentage of the second passage flow rate. Control circuitry 123 may be configured to determine when a second differential pressure developed by second nozzle 160 (e.g., as sensed using upstream channel portion 168 and second channel portion 188) is within the second range associated with second nozzle 160. Control circuitry 123 may be configured to determine the flow rate of fluid flow F using the second differential pressure when the second differential pressure is within the second range.

In examples, flow sensor 122 includes a second sensor 190 configured to sense the second differential pressure. For example, second sensor 190 may include one or more force sensors (e.g., force collectors and/or transducers) configured to receive a force imparted by a fluid and indicative of a pressure of the fluid at a point within second passage 166. The one or more force sensors of second sensor 190 may be configured to receive a force imparted by the fluid and indicative of a pressure of the fluid upstream of the point within second passage 166. Second sensor 190 may be configured to sense the second differential pressure using the force indicative of the pressure of the fluid at the point within second passage 166 and the force indicative of the pressure of the fluid upstream of the point within second passage 166.

For example, second sensor 190 may be configured to sense the second differential pressure using upstream channel portion 168 (e.g., via upstream channel outlet opening 167) and second channel portion 188 (e.g., via second channel outlet opening 189). Second sensor 190 may be configured such that a force imparted on the one or more force sensors of second sensor 190 by a portion of fluid flow F within upstream channel portion 168 is indicative of a pressure of fluid flow F within the conduit (e.g., conduit 114). In examples, structures 176 (e.g., structure 178) is configured to fluidically couple the one or more force sensors of second sensor 190 and upstream channel portion 168. Second sensor 190 may be configured such that a force imparted on the one or more force sensors of second sensor 190 by a fluid within second channel portion 188 is indicative of a pressure of second portion F2, first portion F1, or third portion F3 within second passage 166 (e.g., within second throat section 184). In examples, structures 176 includes a structure 192 configured to fluidically couple the one or more force sensors of second sensor 190 and second channel lumen 191 (e.g., via a plug bolt 193 or other component). Second sensor 190 may be configured to sense the second differential pressure using the force imparted by the portion of fluid flow F within upstream channel portion 168 and the force imparted by the portion of second portion F2, first portion F1, or third portion F3 within second channel 166.

Second sensor 190 may be configured to sense the second differential pressure in other ways in other examples. For example, second sensor 190 may be configured such that the one or more force collectors of second sensor 190 are configured to substantially position within second passage 166 (e.g., rather than within and/or fluidically coupled to second channel lumen 191) to sense the pressure of the fluid at the third point. Second sensor 190 may be configured such that the one or more force collectors of second sensor 190 are configured to substantially position within conduit flow path 113 (e.g., rather than within and/or fluidically coupled to upstream channel lumen 179) to sense the pressure of the fluid at the fourth point upstream of the third point.

Second sensor 190 is configured to communicate a second signal indicative of the second differential pressure to control circuitry 123 (e.g., via communication link 194). Control circuitry 123 may be configured to determine the second differential pressure using the second signal. Control circuitry 123 may be configured to determine if the second differential pressure is within the second range of second nozzle 160 using the second signal. For example, control circuitry 123 may be configured to determine (e.g., assess that) the second differential pressure is within the second range based on comparison of the second signal and the second signal threshold. In some examples, control circuitry 123 may be configured to determine (e.g., assess that) the second differential pressure is within the second range based on comparison of the first signal from first sensor 174 and the first signal threshold. Control circuitry 123 may be configured to, based on the comparison of the second signal and the second signal threshold and/or a comparison of the first signal and the first signal threshold, determine the flow rate of fluid flow F using the second differential pressure. In some examples, the second signal threshold may be indicative of a second signal indicating that second nozzle 160 is experiencing a flow through second passage 166 that is greater than or less than a flow through second passage 166 for which second nozzle 160 is expected to be accurate.

First nozzle 152 is configured to receive first portion F1 via first inlet 154 and discharge first portion F1 via first outlet 156. In examples, first inlet 154 defines an opening 196 ("first inlet opening 196") which opens into first passage 158. Flow sensor 122 may be configured such that first inlet opening 196 fluidically couples conduit flow path 113 and first passage 158 when flow sensor 122 attaches to conduit 114. Flow sensor 122 may be configured such that first inlet opening 196 fluidically couples conduit flow path 113 and first passage 158 when flow sensor 122 attaches to conduit 114. In examples, first outlet 156 defines an opening 198 ("first outlet opening 198") which opens into first passage 158. First nozzle 152 may be configured such that first portion F1 enters through first inlet opening 196 (e.g., from conduit flow path 113), flows through first passage 158, and discharges through first outlet opening 198 (e.g., into second passage 166). In examples, first inlet opening 196 opens into conduit flow path 113 when flow sensor 122 attaches to conduit 114.

Second nozzle 160 is configured to receive second portion F2 via second inlet 162 and discharge second portion F2 via second outlet 164. Second nozzle 160 is configured to discharge a mixture of second portion F2 and first portion F1 via second outlet 164 when first nozzle 152 discharges first portion F1 into second passage 166. In examples, second outlet 164 defines an opening 206 ("second inlet opening 206") which opens into second passage 166. Flow sensor 122 may be configured such that second inlet opening 206 fluidically couples conduit flow path 113 and second passage 166 when flow sensor 122 attaches to conduit 114. In examples, second outlet 164 defines an opening 208 ("second outlet opening 208") which opens into second passage 166. Second nozzle 160 may be configured such that second portion F2 enters through second inlet opening 206 (e.g., from conduit flow path 113), flows through second passage 166, and discharges through second outlet opening 208 (e.g., into conduit flow path 113). Flow sensor 122 may be configured such that second outlet opening 208 fluidically couples second passage 166 and conduit flow path 113 when flow sensor 122 attaches to conduit 114. In examples, second outlet opening 208 opens into conduit flow path 113 when flow sensor 122 attaches to conduit 114.

First nozzle 152 is configured to discharge first portion F1 into second nozzle passage 166 via first outlet opening 198. Second nozzle 160 is configured to discharge first portion F1 and second portion F2 (e.g., as third portion F3) via second outlet opening 208. In examples, second nozzle 160 is configured to discharge first portion F1 and second portion F2 into conduit flow path 113 when flow sensor 122 is attached to conduit 114. In examples, first nozzle body 148 is positioned within second passage 166 (e.g., by support member 125) such that first nozzle 152 discharges first portion F1 into second nozzle passage 166. In examples, first nozzle body 148 is configured to discharge first portion F1 within a portion of second passage 166 defined by second throat section 184. In other examples, first nozzle body 148 may be configured to discharge first portion F1 within a portion of second passage 166 defined by second outlet section 186 or a portion of second passage 166 defined by a second inlet section 212 defined by second nozzle body 150.

Chamber portion 210 may be configured to dampen and/or mitigate static pressure fluctuations within second passage 166 that could result as first nozzle 152 discharges first portion F1 into second passage 166, as second portion F2 flows around first nozzle 152, as first portion F1 substantially mixes with second portion F2, and/or for other reasons. In some examples, chamber portion 210 is configured to dampen and/or mitigate differences in static pressures that might arise between a first location within second passage 166 (e.g., a first location in the vicinity of port 216) and a second location within second passage 166 (e.g., a second location in the vicinity of port 218). Such differences in static fluid pressures might arise due to a flow field (e.g., one or more vortices in the flow field) created within second passage 166 as first nozzle 152 discharges first portion F1 into second passage 166, as second portion F2 flows around first nozzle 152, as first portion F1 substantially mixes with second portion F2, and/or for other reasons. Chamber portion 210 is configured to dampen and/or mitigate the static pressure fluctuations and/or the differences in static pressures such that a static pressure communicated via second channel outlet opening 189 (e.g., to second sensor 190) is more representative of a nominal and/or average static pressure within second passage 166.

For example, chamber portion 210 may be configured to receive a first portion of a fluid (e.g., a first portion of first portion F1 and/or second portion F2) within chamber volume 214 via port opening 217 of port 216. The first portion of the fluid may be at a first static pressure. Chamber portion 210 may be configured to receive a second portion of the fluid (e.g., a second portion of first portion F1 and/or second portion F2) within chamber volume 214 via port opening 219 of port 218. The second portion of the fluid may be at a second static pressure different than the first static pressure. Chamber portion 210 may be configured to receive a third portion of the fluid (e.g., a third portion of first portion F1 and/or second portion F2) within chamber volume 214 via port opening 221 of port 220. The third portion of the fluid may be at a third static pressure different than the first static pressure and/or the second static pressure. Chamber volume 214 may be configured to substantially dampen and/or mitigate the differences between the first static pressure, the second static pressure, and the third static pressure, such that second channel lumen 191 tends to communicate a nominal pressure caused by the first static pressure, the second static pressure, and the third static pressure to second channel outlet opening 189 and/or second sensor 190.

In examples, ports 216, 218, 220 are configured to fluidically couple chamber volume 214 and a portion of second passage 166 defined by second throat section 184. For example, a port such as port 216 may define a passage extending from port opening 217 to chamber volume 214. Port 216 may be configured to fluidically couple chamber volume 214 and the portion of second passage 166 using the passage. In some examples, chamber volume 214 substantially surrounds some portion of second passage 166, such as the portion of second passage 166 defined by second throat section 184. In some examples, chamber volume 214 surrounds a portion of second passage 166 and/or longitudinal axis L. For example, chamber volume 214 may be at least some portion of a substantially annular-shaped volume at least partially surrounding longitudinal axis L. In some examples, chamber volume 214 completely surrounds longitudinal axis L.

Ports 216, 218, 220 may be arranged around boundary of second passage 166 defined by second nozzle wall 151. In examples, ports 216, 218, 220 are arranged on a perimeter P (FIG. 2) defined by second nozzle wall 151. In some examples, ports 216, 218, 220 are substantially evenly spaced around perimeter P, such that an angular displacement (e.g., measured from a point on longitudinal axis L) between a given port and an immediately adjacent port on perimeter P is substantially equal for each port in a plurality of ports defined by sensor 122. Sensor 122 may define any number of ports configured to fluidically couple second passage 166 and chamber volume 214.

In examples, first nozzle 152 is configured to discharge first portion F1 into second nozzle passage 166 upstream of ports 216, 218, 220 when first portion F1 flows through first passage 158 and/or second portion F2 flows through second passage 166. For example, sensor 122 may be configured such that first outlet 156 is substantially between ports 216, 218, 220 and second inlet 162. For example, flow sensor 122 may be configured such that first outlet 156 defines a first displacement D1 between second inlet 162 and first outlet 156. low sensor 122 may be configured such that one or more of ports 216, 218, 220 define a second displacement D2 greater than first displacement D1 between second inlet 162 and the one or more of ports 216, 218, 220. In examples, first displacement D1 and/or second displacement D2 are substantially parallel to longitudinal axis L.

In examples, first nozzle 152 (e.g., first nozzle body 148) is configured to cause an acceleration of first portion F1 as first portion F1 flows from first inlet 154 to first outlet 156. In examples, first nozzle 152 (e.g., first nozzle wall 149) is configured to cause first passage 158 to constrict as first portion F1 flows from first inlet 154 toward first throat section 170. For example, first passage 158 may be configured such that an cross-sectional dimension D3 defined by first passage 158 and passing through a point P1 within first passage 158 decreases as point P1 moves in a direction from first inlet 154 toward first throat section 170. For example, first nozzle 152 may include an inlet section 202 defined by first nozzle body 148 ("first inlet section 202"). First inlet section 202 may extend from first inlet 154 to first throat section 170 and define an inlet portion of first passage 158. First inlet section 202 may be configured to cause cross-sectional dimension D3 to decrease as point P1 moves through the inlet portion and in the direction from first inlet 154 toward first throat section 170. In examples, cross-sectional dimension D3 is substantially perpendicular to longitudinal axis L. In examples, first inlet section 202 surrounds longitudinal axis L.

First nozzle 152 (e.g., first nozzle body 148) may be configured to cause an deceleration of first portion F1 as first portion F1 flows from first throat section 170 to first outlet 156. In examples, first nozzle 152 (e.g., first nozzle wall 149) is configured to cause first passage 158 to expand as first portion F1 flows from first throat section 170 toward first outlet 156. For example, first passage 158 may be configured such that cross-sectional dimension D3 increases as point P1 moves from first throat section 170 in a direction toward first outlet 156. In examples, first nozzle 152 includes an outlet section 204 defined by first nozzle body 148 ("first outlet section 204"). First outlet section 204 may extend from first throat section 170 to first outlet 156 and define an outlet portion of first passage 158. First outlet section 204 may be configured to cause cross-sectional dimension D3 to increase as point P1 moves through the outlet portion of first passage 158 and in the direction from first throat portion 170 toward first outlet 156.

First nozzle 152 (e.g., first nozzle body 148) may be configured to cause cross-sectional dimension D3 to reach a minimum within a throat portion of first passage 158 defined by first throat section 170. In examples, first inlet section 202, first throat section 170, and first outlet section 204 define a venturi nozzle extending from first inlet 154 to first outlet 156. First inlet 154 may be configured to define a cross-sectional area (e.g., an area of first inlet opening 196) having any shape. In examples, first inlet opening 154 is configured to define a cross-sectional area having an oval shape or a circular shape. First outlet 156 may be configured to define a cross-sectional area (e.g., an area of first outlet opening 198) having any shape. In examples, first outlet opening 156 is configured to define a cross-sectional area having an oval shape or a circular shape.

In examples, second nozzle 160 (e.g., second nozzle body 150) is configured to cause an acceleration of second portion F2 as second portion F2 flows from second inlet 162 to second outlet 164. In examples, second nozzle 160 (e.g., second nozzle wall 151) is configured to cause second passage 166 to constrict as second portion F2 flows from second inlet 162 toward second throat section 184. For example, second passage 166 may be configured such that an cross-sectional dimension D4 defined by second passage 166 (e.g., defined from a first portion of second nozzle wall 151 to a second portion of second nozzle wall 151) and passing through a point P2 within second passage 166 decreases as point P2 moves in a direction from second inlet 162 toward second throat section 184. For example, second inlet section 212 may extend from second inlet 162 to second throat section 184 and define an inlet portion of second passage 166. Second inlet section 212 may be configured to cause cross-sectional dimension D4 to decrease as point P2 moves through the inlet portion of second inlet section 212 and in the direction from second inlet 162 toward second throat section 184. In examples, cross-sectional dimension D4 is substantially perpendicular to longitudinal axis L. In examples, second inlet section 212 surrounds longitudinal axis L.

Second nozzle 160 (e.g., second nozzle body 150) may be configured to cause an deceleration of second portion F2 and/or a combination of second portion F2 and first portion F1 as second portion F2 and/or the combination of second portion F2 and first portion F1 flows from second throat section 184 to second outlet 164. In examples, second nozzle 160 (e.g., second nozzle wall 151) is configured to cause second passage 166 to expand as second portion F2 and/or the combination of second portion F2 and first portion F1 flows from second throat section 184 toward second outlet 164. For example, second passage 166 may be configured such that cross-sectional dimension D4 increases as point P2 moves from second throat section 184 in a direction toward second outlet 164. In examples, second outlet section 186 extends from second throat section 184 to second outlet 164 and defines an outlet portion of second passage 166. Second outlet section 186 may be configured to cause cross-sectional dimension D4 to increase as point P2 moves through the outlet portion of second passage 166 and in the direction from second throat portion 184 toward second outlet 164.

Second nozzle 160 (e.g., second nozzle body 152) may be configured to cause cross-sectional dimension D4 to reach a minimum within a throat portion of second passage 166 defined by second throat section 184. In examples, second inlet section 212, second throat section 184, and second outlet section 186 define a venturi nozzle extending from second inlet 162 to second outlet 164. Second inlet 162 may be configured to define a cross-sectional area (e.g., an area of second inlet opening 206) having any shape. In examples, second inlet opening 206 is configured to define a cross-sectional area having an annular shape (e.g., due to second inlet 162 substantially surrounding first inlet 154, and/or due to first nozzle body 148 extending within second passage 166). In some examples, second inlet opening 206 is configured to define a cross-sectional area having an oval shape or a circular shape. Second outlet 164 may be configured to define a cross-sectional area (e.g., an area of second outlet opening 208) having any shape. In examples, second outlet opening 208 is configured to define a cross-sectional area having an oval shape or a circular shape.

First inlet 154 may be located to define any position on longitudinal L relative to second inlet 162. For example, first inlet 154 may be configured such that a first plane which includes at least some portion of first inlet opening 196 intersects longitudinal axis L at a first point. Second inlet 162 may be configured such that a second plane which includes at least some portion of second inlet opening 206 intersects longitudinal axis L at a second point. In examples, the first point and the second point are substantially co-located on longitudinal axis L. In some examples, the first point is displaced from the second point in a direction from first outlet 156 toward first inlet 154. In some examples, the first point is displaced from the second point in a direction from first inlet 154 toward first outlet 156.

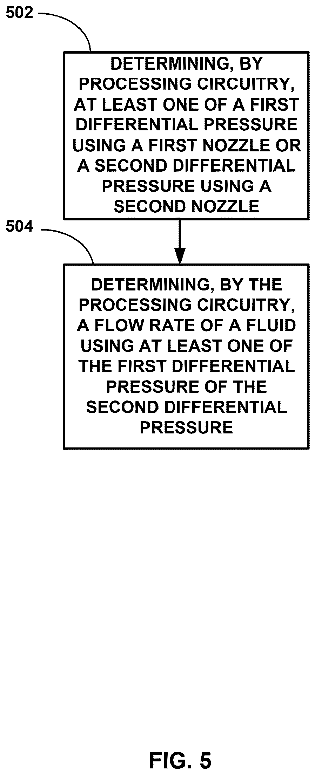

FIG. 5 illustrates a flow diagram of an example technique for providing a supply gas to a bleed system. Although the technique is described with reference to flow sensor 122 and/or delivery system 100 (FIGS. 1-6), in other examples, the technique may be used with other components and/or systems.

The technique includes determining, by control circuitry 123, at least one of a first differential pressure using first nozzle 152 or a second differential pressure using second nozzle 160 (502). Control circuitry 123 may determine the first differential pressure using a first sensor 174. First sensor 174 may communicate a first signal indicative of a difference in fluid pressures between a first point within a first passage 158 defined by first nozzle 152 and a second point upstream of the first point when a first portion F1 of the fluid flows from a first inlet 154 of first nozzle 152 to a first outlet 156 of first nozzle 152.

Control circuitry 123 may determine the second differential pressure using a second sensor 190. Second sensor 190 may communicate a second signal indicative of a difference in fluid pressures between a third point within a second passage 166 defined by second nozzle 160 and a fourth point upstream of the third point when a second portion F2 of the fluid flows from a second inlet 162 of second nozzle 160 to a second outlet 164 of second nozzle 160. In examples, first nozzle 152 receives first portion F1 and/or second nozzle 160 receives second portion F2 from a fluid flow F flowing within a conduit flow path 113 of a conduit 114. In examples, conduit 114 (e.g., conduit flow path 113) receives fluid flow F from a delivery system 100 of a vehicle 102.

The technique includes determining, by control circuitry 123, a flow rate of fluid flow F using at least one of the first differential pressure or the second differential pressure (504). In examples, control circuitry 123 determines the flow rate of fluid flow F using a flow rate of first portion F1 through first passage 158 (e.g., as indicated by the first differential pressure). Control circuitry 123 may determine the flow rate of fluid flow F using a flow rate of second portion F2 and/or a flow rate of a combination of second portion F2 and first portion F1 through second passage 166 (e.g., as indicated by the second differential pressure). In some examples, control circuitry 123 determines the flow rate of fluid flow F using the flow rate of first portion F1 through first passage 158 the flow rate of second portion F2 and/or a flow rate of a combination of second portion F2 and first portion F1 through second passage 166 (e.g., as indicated by the second differential pressure and the second differential pressure).

In examples, a first sensor 174 communicates a first signal indicative of the first differential pressure to control circuitry 123. A second sensor 190 may communicate a second signal indicative of the second differential pressure to control circuitry 123. Control circuitry 123 may determine the flow rate of fluid flow F using the first signal or the second signal. In examples, control circuitry 123 determines the flow rate of fluid flow F using the first differential pressure when the first differential pressure is within a first range. Control circuitry 123 may determine the flow rate of fluid flow F using the second differential pressure when the second differential pressure is within a second range. In some examples, control circuitry 123 determines the flow rate of fluid flow F using the first differential pressure and the second differential pressure when the first differential pressure is within the first range and the second differential pressure is within the second range.

Control circuitry 123 may determine the flow rate of fluid flow F by correlating the flow rate of first portion F1 (e.g., as determined by the first differential pressure) and the flow rate of fluid flow F. In examples, control circuitry 123 correlates a specific flow rate of first portion F1 (e.g., correlates a specific first differential pressure) to a specific flow rate of fluid flow F (e.g., within conduit 114 or another conduit of delivery system 100). Control circuitry 123 may determine the flow rate of fluid flow F by correlating the flow rate of second portion F2 and/or a combination of second portion F2 and first portion F1 (e.g., as determined by the second differential pressure) and the flow rate of fluid flow F. In examples, control circuitry 123 correlates a particular flow rate of second portion F2 and/or a combination of second portion F2 and first portion F1 (e.g., correlates a particular second differential pressure) to a particular flow rate of fluid flow F (e.g., within conduit 114 or another conduit of delivery system 100).

As used here, when a first portion of a system (e.g., flow sensor 122) is substantially parallel to a second portion of the system or an axis defined by the system, this may mean the first portion is parallel or nearly parallel to the second portion or the axis to the extent permitted by manufacturing tolerances. In some examples, when the first portion is substantially parallel to the second portion or the axis, this may mean a first vector defined by the first component of the system defines an angle of less than 10 degrees, in some examples less than 5 degrees, and in some examples less than 1 degree, with a second vector defined by the second component or the axis. When a first portion of the system is substantially perpendicular to a second portion of or an axis defined by the system, this may mean the first portion is perpendicular or nearly perpendicular to the second portion or the axis to the extent permitted by manufacturing tolerances. In some examples, when the first portion is substantially perpendicular to the second portion or the axis, this may mean that the first vector defined by the first component of the system defines an angle of at least 80 degrees, in some examples at least 85 degrees, and in some examples at least 89 degrees, with the second vector defined by the second component. The first portion may be a first component of the system, a first axis and/or first vector defined by the first system, a first plane defined by the first system, a first area defined by the first system, and/or another portion of the first system. The second portion may be a second component of the system, a second axis and/or second vector defined by the second system, a second plane defined by the second system, a second area defined by the second system, and/or another portion of the second system.

As used here, when a first portion of a system (e.g., flow sensor 122) supports a second portion of the system, this means that when the second portion causes a first force to be exerted on the first portion, the first portion causes a second force to be exerted on the second portion in response to the first force. The first force and/or second force may be a contact force and/or an action-at-a-distance force. For example, first force and/or second force may be mechanical force, a magnetic force, a gravitational force, or some other type of force. The first portion of the system may be a portion of the system or a portion of a component of the system. The second portion of the system may be another portion of the system or another portion of the same component or a different component. In some examples, when the first portion of the system supports the second portion of the system, this may mean the second portion is mechanically supported by and/or mechanically connected to the first portion.

Control circuitry 123 may include any suitable arrangement of hardware, software, firmware, or any combination thereof, to perform the techniques attributed to control circuitry 123 herein. Examples of control circuitry 123 include any one or more microprocessors, digital signal processors (DSPs), application specific integrated circuits (ASICs), field programmable gate arrays (FPGAs), or any other equivalent integrated or discrete logic circuitry, as well as any combinations of such components. When control circuitry 123 includes software or firmware, control circuitry 123 further includes any necessary hardware for storing and executing the software or firmware, such as one or more processors or processing units. In general, a processing unit may include one or more microprocessors, DSPs, ASICs, FPGAs, or any other equivalent integrated or discrete logic circuitry, as well as any combinations of such components.

A system setpoint for flow sensor 122 (e.g., a threshold, a first range, and/or a second range) may be stored in a memory of control circuitry 123 or in another device communicatively coupled to control circuitry 123. The memory may include any volatile or non-volatile media, such as a random access memory (RAM), read only memory (ROM), non-volatile RAM (NVRAM), electrically erasable programmable ROM (EEPROM), flash memory, and the like. In addition, in some examples, the memory or another memory may also store executable instructions for causing control circuitry 123 described herein to perform the actions attributed to it.

Communication links 141, 143, 145, 182, 194 may be hard-line and/or wireless communications links. Communication links 141, 143, 145, 182, 194 may comprise some portion of control circuitry 123, first sensor 174, second sensor 190, one or more of gas loads 104, and/or another portion of flow sensor 122 and/or delivery system 100. Communication links 141, 143, 145, 182, 194 may comprise a wireless Internet connection, a direct wireless connection such as wireless LAN, Bluetooth^{™}, Wi-Fi^{™}, and/or an infrared connection. Communication links 141, 143, 145, 182, 194 may utilize any wireless or remote communication protocol.

First sensor 174 may be configured to generate a first signal indicative of a first differential pressure and second sensor 190 may be configured to generate a second signal indicative of a second differential pressure at any location within flow sensor 122 and/or conduit 114. The first signal and/or the second signal may be an analog electrical signal or a digital signal. In some examples, first sensor 174 and/or second sensor 190 may include sensor processing circuitry configured to interpret a response of a transducer and/or force collector and generate the first signal or the second signal, and/or control circuitry 123 may include sensor processing circuitry configured to interpret a response of the transducer and/or the force collector and generate the first signal and/or the second signal. First sensor 174 may be configured to communicate the first signal and/or second sensor 190 may be configured to communicate the second signal to other devices in data communication with first sensor 174 and/or second sensor 190.

Flow control device 137 and/or other flow control devices of delivery system 100 may be configured to operate in any manner and with any type of operation system. One or more of flow control device 137 and/or other flow control devices may be configured to be pneumatically operated, a hydraulically operated, manually operated, motor-driven, or configured to operate in another manner. Flow control device 137 and/or other flow control devices of delivery system 100 may be configured to operate based on a communication from control circuitry 123 or other control circuitry. Control circuitry 123 or the other control circuitry may be configured to cause operation of one or more of Flow control device 137 and/or other flow control devices of delivery system 100 based on the first signal, the second signal, a signal indicative of a flow rate of fluid flow F, another parameter of a supply gas within delivery system 100, other parameters within delivery system 100, other operations conducted by vehicle 102, and/or other reasons.

The techniques described in this disclosure, including those attributed to control circuitry 123 and other control circuitry, processing circuitry, sensors, or various constituent components, may be implemented, at least in part, in hardware, software, firmware or any combination thereof. For example, various aspects of the techniques may be implemented within one or more processors, including one or more microprocessors, DSPs, ASICs, FPGAs, or any other equivalent integrated or discrete logic circuitry, as well as any combinations of such components, embodied in any suitable device. Processing circuitry, control circuitry, and sensing circuitry, as well as other processors, controllers, and sensors described herein, may be implemented at least in part as, or include, one or more executable applications, application modules, libraries, classes, methods, objects, routines, subroutines, firmware, and/or embedded code, for example. In addition, analog circuits, components, and circuit elements may be employed to construct one, some or all of the control circuitry and sensors, instead of or in addition to the partially or wholly digital hardware and/or software described herein. Accordingly, analog or digital hardware may be employed, or a combination of the two.

In one or more examples, the functions described in this disclosure may be implemented in hardware, software, firmware, or any combination thereof. If implemented in software, the functions may be stored on, as one or more instructions or code, a computer-readable medium and executed by a hardware-based processing unit. The computer-readable medium may be an article of manufacture including a non-transitory computer-readable storage medium encoded with instructions. Instructions embedded or encoded in an article of manufacture including a non-transitory computer-readable storage medium encoded, may cause one or more programmable processors, or other processors, to implement one or more of the techniques described herein, such as when instructions included or encoded in the non-transitory computer-readable storage medium are executed by the one or more processors. Example non-transitory computer-readable storage media may include RAM, ROM, programmable ROM (PROM), erasable programmable ROM (EPROM), electronically erasable programmable ROM (EEPROM), flash memory, a hard disk, a compact disc ROM (CD-ROM), a floppy disk, a cassette, magnetic media, optical media, or any other computer readable storage devices or tangible computer readable media.

In some examples, a computer-readable storage medium comprises non-transitory medium. The term "non-transitory" may indicate that the storage medium is not embodied in a carrier wave or a propagated signal. In certain examples, a non-transitory storage medium may store data that can, over time, change *(e.g.,* in RAM or cache).

The functionality described herein may be provided within dedicated hardware and/or software modules. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components. Also, the techniques could be fully implemented in one or more circuits or logic elements.

The present disclosure includes the following examples.

Example 1: A flow sensor comprising: a first nozzle body defining a first inlet, a first outlet, and a first passage extending from the first inlet to the first outlet, wherein the first passage is configured to receive a first portion of a fluid flow using the first inlet and produce a first differential pressure as the first portion flows through the first passage; a second nozzle body defining a second inlet, a second outlet, and a second passage extending from the second inlet to the second outlet, wherein the first nozzle body is configured to discharge the first portion into the second passage using the first outlet, wherein the second passage is configured to receive a second portion of the fluid flow using the second inlet and produce a second differential pressure as the second portion flows through the second passage, and wherein the second nozzle body is configured to discharge the first portion and the second portion using the second outlet; a first sensor configured to determine the first differential pressure; a second sensor configured to determine the second differential pressure; and processing circuitry configured to: receive a first signal indicative of the first differential pressure from the first sensor and receive a second signal indicative of the second differential pressure from the second sensor, and determine a flow rate of the fluid flow using at least one of the first signal or the second signal.

Example 2: The flow sensor of example 1, wherein the processing circuitry is configured to determine the flow rate of the fluid flow using the first signal when the first differential pressure is within a first range and configured to determine the flow rate of the fluid flow using the second signal when the second differential pressure is within a second range different from the first range.

Example 3: The flow sensor of example claim 2, wherein the first range defines a first range midpoint and the second range defines a second range midpoint greater than the first range midpoint.

Example 4: The flow sensor of any of examples 1-4, wherein the first nozzle body defines a longitudinal axis extending through a first inlet opening defined by the first inlet and a first outlet opening defined by the first outlet, and wherein the longitudinal axis extends through a second outlet opening defined by the second outlet.

Example 5: The flow sensor of any of examples 1-5, wherein the first nozzle body defines a first throat section between the first inlet and the first outlet, wherein the first throat section defines a first throat cross-sectional dimension less than a cross-sectional dimension defined by the first inlet and less than a cross-sectional dimension defined by the first outlet, and wherein the first passage extends through the first throat section.

Example 6: The flow sensor of example 5, wherein the first sensor is configured to determine the first differential pressure using a pressure of the first portion within the first throat section.

Example 7: The flow sensor of any of examples 1-6, wherein at least one of the first nozzle body or the second nozzle body defines a first channel configured to fluidically couple the first sensor and the first passage, and wherein at least one of the first nozzle body or the second nozzle body defines a second channel configured to fluidically couple the second sensor and the second passage.

Example 8: The flow sensor of any of examples 1-7, wherein the second nozzle body defines a second throat section between the second inlet and the second outlet, wherein the second throat section defines a second throat cross-sectional dimension than a cross-sectional dimension defined by the second outlet, and wherein the second passage extends through the second throat section.

Example 9: The flow sensor of example 8, wherein the second sensor is configured to determine the second differential pressure using at least one of a pressure of the second portion within the second throat section or a pressure of a combination of the second portion and the first portion within the second throat section.

Example 10: The flow sensor of example 8 or example 9, wherein the first nozzle body is configured to discharge the first portion into the second throat section using the first outlet.

Example 11: The flow sensor of any of examples 1-10, wherein the second nozzle body defines a chamber at least partially surrounding the second passage, wherein the second nozzle body defines a plurality of ports, wherein each port in the plurality of ports fluidically couples the second passage and the chamber, and wherein the second sensor is configured to determine the second differential pressure using a pressure of a fluid within the chamber.

Example 12: The flow sensor of example 11, wherein the first nozzle body is configured to discharge the first portion into the second passage upstream of the plurality of ports when the first portion flows downstream from the first inlet to the first outlet.

Example 13: The flow sensor of any of examples 1-12, wherein the processing circuitry is configured to determine the flow rate of the fluid flow using the first signal and the second signal.

Example 14: The flow sensor of any of examples 1-13, wherein at least one of the first nozzle body or the second nozzle body defines a flange portion configured to attach to a conduit defining a flow path for the fluid flow, wherein the flange portion is configured to position the first inlet and the second inlet within the flow path for the fluid flow when the flange portion attaches to the conduit.

Example 15: The flow sensor of any of examples 1-14, wherein the first nozzle body and the second nozzle body define a unitary body.

Example 16: A flow sensor comprising: a first nozzle body defining a first inlet, a first outlet, and a first passage extending from the first inlet to the first outlet, wherein the first passage is configured to receive a first portion of a fluid flow using the first inlet and produce a first differential pressure as the first portion flows through the first passage, wherein the first nozzle body defines a longitudinal axis extending through a first inlet opening defined by the first inlet and a first outlet opening defined by the first outlet; a second nozzle body defining a second inlet, a second outlet, and a second passage extending from the second inlet to the second outlet, wherein the first nozzle body is configured to discharge the first portion into the second passage using the first outlet, wherein the second passage is configured to receive a second portion of the fluid flow using the second inlet and produce a second differential pressure as the second portion flows through the second passage, wherein the second nozzle body is configured to discharge the first portion and the second portion using the second outlet, and wherein the longitudinal axis extends through a second outlet opening defined by the second outlet; a first sensor configured to determine the first differential pressure; a second sensor configured to determine the second differential pressure; and processing circuitry configured to: receive a first signal indicative of the first differential pressure from the first sensor and receive a second signal indicative of the second differential pressure from the second sensor, determine a flow rate of the fluid flow using the first signal when the first differential pressure is within a first range, and determine the flow rate of the fluid flow using the second signal when the second differential pressure is within a second range different from the first range.

Example 17: The flow sensor of example 16, wherein the first nozzle body defines a first throat section between the first inlet and the first outlet, wherein the first throat section defines a first throat cross-sectional dimension less than a cross-sectional dimension defined by the first inlet and less than a cross-sectional dimension defined by the first outlet, and wherein the first sensor is configured to determine the first differential pressure using a pressure of the first portion in the first throat section, wherein the second nozzle body defines a second throat section between the second inlet and the second outlet, wherein the second throat section defines a second throat cross-sectional dimension less than a cross-sectional dimension defined by the second outlet, and wherein the second passage extends through the second throat section, and wherein the second sensor is configured to determine the second differential pressure using at least one of a pressure of the second portion in the second throat section or a pressure of a combination of the second portion and the first portion in the second throat section.

Example 18: The flow sensor of example 15 or example 16, wherein the second nozzle body defines a chamber at least partially surrounding the second passage, wherein the second nozzle body defines a plurality of ports fluidically coupling the second passage and the chamber, wherein the pressure of the second portion within the second passage is a pressure of the second portion within the chamber, and wherein the first nozzle body is configured to discharge the first portion into the second passage upstream of the plurality of ports when the first portion flows downstream from the first inlet to the first outlet.

Example 19: A method comprising: determining, by processing circuitry, at least one of: a first differential pressure of a first fluid portion flowing within a first passage defined by a first nozzle body, or a second differential pressure of a second fluid portion flowing within a second passage defined by a second nozzle body, wherein the first nozzle body extends within the second passage, wherein the first nozzle body defines a first outlet configured to discharge the first fluid portion into the second passage, wherein the second nozzle body defines a second outlet configured to discharge the first fluid portion and the second fluid portion into a conduit flow path defined by a conduit, and wherein the first fluid portion and the second fluid portion comprise a fluid flow within the conduit flow path; and determining, by the processing circuitry, a flow rate of the fluid flow using at least one of the first differential pressure or the second differential pressure.

Example 20: The method of claim 20, wherein a first sensor is configured to determine the first differential pressure over a first range from a first primary endpoint to a first secondary endpoint greater than the first primary endpoint, and wherein a second sensor is configured to determine the second differential pressure over a second range from a second primary endpoint to a second secondary endpoint greater than the second primary endpoint, and the method further comprising: determining the flow rate, by the processing circuitry, using a signal from the first sensor when the first differential pressure is greater than or equal to the first primary endpoint and less than or equal to the first secondary endpoint; and determine the flow rate, by the processing circuitry, using a signal from the second sensor when the second differential pressure is greater than or equal to the second primary endpoint and less than or equal to the second secondary endpoint.

Various examples have been described. These and other examples are within the scope of the following claims.

## Claims

1. A flow sensor comprising:
a first nozzle body defining a first inlet, a first outlet, and a first passage extending from the first inlet to the first outlet, wherein the first passage is configured to receive a first portion of a fluid flow using the first inlet and produce a first differential pressure as the first portion flows through the first passage;
a second nozzle body defining a second inlet, a second outlet, and a second passage extending from the second inlet to the second outlet,
wherein the first nozzle body is configured to discharge the first portion into the second passage using the first outlet,
wherein the second passage is configured to receive a second portion of the fluid flow using the second inlet and produce a second differential pressure as the second portion flows through the second passage, and
wherein the second nozzle body is configured to discharge the first portion and the second portion using the second outlet;
a first sensor configured to determine the first differential pressure;
a second sensor configured to determine the second differential pressure; and
processing circuitry configured to:
receive a first signal indicative of the first differential pressure from the first sensor and receive a second signal indicative of the second differential pressure from the second sensor, and
determine a flow rate of the fluid flow using at least one of the first signal or the second signal.

2. The flow sensor of claim 1, wherein the processing circuitry is configured to determine the flow rate of the fluid flow using the first signal when the first differential pressure is within a first range and configured to determine the flow rate of the fluid flow using the second signal when the second differential pressure is within a second range different from the first range.

3. The flow sensor of claim 2, wherein the first range defines a first range midpoint and the second range defines a second range midpoint greater than the first range midpoint.

4. The flow sensor of any of claims 1 to 3,
wherein the first nozzle body defines a longitudinal axis extending through a first inlet opening defined by the first inlet and a first outlet opening defined by the first outlet, and
wherein the longitudinal axis extends through a second outlet opening defined by the second outlet.

5. The flow sensor of any of claims 1 to 4,
wherein the first nozzle body defines a first throat section between the first inlet and the first outlet,
wherein the first throat section defines a first throat cross-sectional dimension less than a cross-sectional dimension defined by the first inlet and less than a cross-sectional dimension defined by the first outlet,
wherein the first passage extends through the first throat section, and
wherein the first sensor is configured to determine the first differential pressure using a pressure of the first portion within the first throat section.

6. The flow sensor of any of claims 1 to 5,
wherein at least one of the first nozzle body or the second nozzle body defines a first channel configured to fluidically couple the first sensor and the first passage, and
wherein at least one of the first nozzle body or the second nozzle body defines a second channel configured to fluidically couple the second sensor and the second passage.

7. The flow sensor of any of claims 1 to 6,
wherein the second nozzle body defines a second throat section between the second inlet and the second outlet,
wherein the second throat section defines a second throat cross-sectional dimension than a cross-sectional dimension defined by the second outlet, and wherein the second passage extends through the second throat section,
wherein the second sensor is configured to determine the second differential pressure using at least one of a pressure of the second portion within the second throat section or a pressure of a combination of the second portion and the first portion within the second throat section, and
wherein the first nozzle body is configured to discharge the first portion into the second throat section using the first outlet.

8. The flow sensor of any of claims 1 to 7,
wherein the second nozzle body defines a chamber at least partially surrounding the second passage,
wherein the second nozzle body defines a plurality of ports,
wherein each port in the plurality of ports fluidically couples the second passage and the chamber, and
wherein the second sensor is configured to determine the second differential pressure using a pressure of a fluid within the chamber.

9. The flow sensor of claim 8, wherein the first nozzle body is configured to discharge the first portion into the second passage upstream of the plurality of ports when the first portion flows downstream from the first inlet to the first outlet.

10. The flow sensor of any of claims 1 to 9, wherein the processing circuitry is configured to:
determine a flow rate of the fluid flow using the first signal when the first differential pressure is within a first range, and
determine the flow rate of the fluid flow using the second signal when the second differential pressure is within a second range different from the first range.

11. The flow sensor of any of claims 1 to 10, wherein the processing circuitry is configured to determine the flow rate of the fluid flow using the first signal and the second signal.

12. The flow sensor of any of claims 1 to 11,
wherein at least one of the first nozzle body or the second nozzle body defines a flange portion configured to attach to a conduit defining a flow path for the fluid flow, and
wherein the flange portion is configured to position the first inlet and the second inlet within the flow path for the fluid flow when the flange portion attaches to the conduit.

13. The flow sensor of any of claims 1 to 12, wherein the first nozzle body and the second nozzle body define a unitary body.

14. A method comprising:
determining, by processing circuitry, at least one of:
a first differential pressure of a first fluid portion flowing within a first passage defined by a first nozzle body, or
a second differential pressure of a second fluid portion flowing within a second passage defined by a second nozzle body,
wherein the first nozzle body extends within the second passage, wherein the first nozzle body defines a first outlet configured to discharge the first fluid portion into the second passage, wherein the second nozzle body defines a second outlet configured to discharge the first fluid portion and the second fluid portion into a conduit flow path defined by a conduit, and wherein the first fluid portion and the second fluid portion comprise a fluid flow within the conduit flow path; and
determining, by the processing circuitry, a flow rate of the fluid flow using at least one of the first differential pressure or the second differential pressure.

15. The method of claim 14, wherein a first sensor is configured to determine the first differential pressure over a first range from a first primary endpoint to a first secondary endpoint greater than the first primary endpoint, and wherein a second sensor is configured to determine the second differential pressure over a second range from a second primary endpoint to a second secondary endpoint greater than the second primary endpoint, and the method further comprising:
determining the flow rate, by the processing circuitry, using a signal from the first sensor when the first differential pressure is greater than or equal to the first primary endpoint and less than or equal to the first secondary endpoint; and
determine the flow rate, by the processing circuitry, using a signal from the second sensor when the second differential pressure is greater than or equal to the second primary endpoint and less than or equal to the second secondary endpoint.
